(19) Europäisches Patentamt
European Patent Office
Office européen des brevets

(11) **EP 4 622 158 A1**

(12) **EUROPEAN PATENT APPLICATION**
published in accordance with Art. 153(4) EPC

(43) Date of publication:
**24.09.2025  Bulletin 2025/39**

(21) Application number: **24758693.6**

(22) Date of filing: **31.01.2024**

(51) International Patent Classification (IPC):
**H04L 5/00** *(2006.01)*

(52) Cooperative Patent Classification (CPC):
**H04L 5/0014; H04L 5/0005; H04L 5/0053; H04L 5/0094**

(86) International application number:
**PCT/CN2024/075058**

(87) International publication number:
**WO 2025/160834 (07.08.2025 Gazette 2025/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **New H3C Technologies Co., Ltd.**
**Hangzhou, Zhejiang 310052 (CN)**

(72) Inventors:
• **ZHOU, Lei**
  **Beijing 100102 (CN)**
• **KONG, Lei**
  **Beijing 100102 (CN)**

(74) Representative: **2SPL Patentanwälte PartG mbB**
**Landaubogen 3**
**81373 München (DE)**

(54) **DATA TRANSMISSION METHOD AND APPARATUS, AND DEVICE**

(57)  The present disclosure provides a data transmission method and apparatus and a device, where the method includes: sending, by a base station, a resource configuration message to a user equipment, where the resource configuration message is used to indicate a sub-band full-duplex (SBFD) time-frequency resource assigned to the user equipment; and interacting, by the base station, uplink and downlink data with the user equipment based on the SBFD time-frequency resource. According to the technical solution of the present disclosure, resource utilization rate can be improved.

Send a resource configuration message to a user equipment (UE), where the resource configuration message is used to indicate an SBFD time-frequency resource assigned to the UE — 111

Interact uplink and downlink data with the UE based on the SBFD time-frequency resource — 112

FIG. 1A

EP 4 622 158 A1

**Description**

**TECHNICAL FIELD**

The present disclosure relates to the field of communication technology, and in particular, to a data transmission method and apparatus, and a device.

**BACKGROUND**

Time Division Duplex (TDD) systems are widely used in mobile communication systems, such as 5G (5th Generation) systems. In a TDD system, a frame structure is divided into DL (Downlink) slots, UL (Uplink) slots, and flexible slots.

A DL slot includes a plurality of DL symbols, and downlink data is processed on frequency-domain resources corresponding to these DL symbols. A UL slot includes a plurality of UL symbols, and uplink data is processed on frequency-domain resources corresponding to these UL symbols.

A flexible slot includes at least one flexible (F) symbol, where the F symbol may be used for DL, that is, downlink data is processed on frequency-domain resources corresponding to the F symbol, the F symbol may also be used for UL, that is, uplink data is processed on frequency-domain resources corresponding to the F symbol, and the F symbol may also be used for a guard period (GP), that is, uplink and downlink switching is protected on frequency-domain resources corresponding to the F symbol.

The TDD system may operate in a half duplex (HD) mode, that is, at a same moment, a same frequency-domain resource can be used for either of UL or DL.

**SUMMARY**

The present disclosure provides a data transmission method, performed by a base station, and the method includes:

sending a resource configuration message to a user equipment, where the resource configuration message is used to indicate a sub-band full-duplex (SBFD) time-frequency resource assigned to the user equipment; and
interacting uplink and downlink data with the user equipment based on the SBFD time-frequency resource.

The present disclosure provides a data transmission method, performed by a user equipment, and the method includes:

receiving a resource configuration message sent by a base station, where the resource configuration message is used to indicate a sub-band full-duplex (SBFD) time-frequency resource assigned to the user equipment; and
interacting uplink and downlink data with the base station based on the SBFD time-frequency resource.

The present disclosure provides a data transmission apparatus, applied in a base station, and the apparatus includes:

a sending module, configured to send a resource configuration message to a user equipment, where the resource configuration message is used to indicate a sub-band full-duplex (SBFD) time-frequency resource assigned to the user equipment; and
a transmitting module, configured to interact uplink and downlink data with the user equipment based on the SBFD time-frequency resource.

The present disclosure provides a data transmission method, applied in a user equipment, and the apparatus includes:

a receiving module, configured to receive a resource configuration message sent by a base station, where the resource configuration message is used to indicate a sub-band full-duplex (SBFD) time-frequency resource assigned to the user equipment; and
a transmitting module, configured to interact uplink and downlink data with the user equipment based on the SBFD time-frequency resource.

The present disclosure provides a base station, including a processor and a machine-readable storage medium, where the machine-readable storage medium stores a machine-executable instruction executable by the processor; and the processor is configured to execute the machine-executable instruction to implement the above data transmission method.

The present disclosure provides a user equipment, including a processor and a machine-readable storage medium, where the machine-readable storage medium stores a machine-executable instruction executable by the processor; and the processor is configured to execute the machine-executable instruction to implement the above data transmission method.

It can be seen from the above technical solution that, by configuring an SBFD (Sub-Band Full Duplex) time-frequency resource, the base station and the user equipment may transmit uplink and downlink data by using the SBFD time-frequency resource, for example, the base station sends downlink data to the user equipment by using the SBFD time-frequency resource, and the user equipment sends uplink data to the base station by using the SBFD time-frequency resource, so that the SBFD time-frequency resource is fully used for data transmission.

For example, uplink data may be transmitted by using an SBFD time-frequency resource of a downlink slot, to support uplink data transmission in a TDD system. Resource utilization rate is improved, and network coverage and network capacity are improved. Uplink transmission resources and cell coverage are increased, and transmission reliability and cell coverage radius of uplink data are improved. Therefore, uplink transmission latency is reduced, and uplink transmission capacity is increased.

Downlink data may be transmitted by using an SBFD time-frequency resource of an uplink slot, to support downlink data transmission in a TDD system. The resource utilization rate is improved, and downlink transmission resources are increased. The downlink data transmission reliability is improved, the downlink transmission latency is reduced, and the downlink transmission capacity is increased.

## BRIEF DESCRIPTION OF DRAWINGS

FIG. 1A and FIG. 1B are schematic flowcharts of a data transmission method in an embodiment.
FIG. 2 is a schematic scheduling diagram of configuring SBFD time-frequency resources through DCI.
FIG. 3 is a schematic scheduling diagram of configuring SBFD time-frequency resources with slots and periods through DCI.
FIG. 4 is a schematic flowchart of dynamically modifying semi-static configuration.
FIG. 5 is a schematic diagram of an SBFD time-frequency resource dynamic manner, an assertion period and a start point.
FIG. 6A is a schematic structural diagram of a base station in an embodiment.
FIG. 6B is a schematic structural diagram of a user equipment in an embodiment.

## DETAILED DESCRIPTION

The terminology used in the embodiments of the present disclosure is merely for the purpose of describing a specific embodiment, and is not intended to limit the present disclosure. As used in the present disclosure and the claims, singular forms "a", "an", and "the" are also intended to include plural forms unless the context clearly indicates other meanings. It should also be understood that the term "and/or" as used herein refers to any or all possible combinations containing one or more associated listed items.

It should be understood that although the terms first, second, third, etc., may be used to describe various information in the embodiments of the present disclosure, the information should not be limited to these terms. These terms are only used to distinguish a same type of information from each other. For example, without departing from a scope of the present disclosure, first information may also be referred to as second information, and similarly, second information may also be referred to as first information. Depending on the context, moreover, the word "if" used may be interpreted as "when" or "upon" or "in response to determining."

A TDD system may operate in an HD mode, that is, at a same moment, a same frequency-domain resource can be used for either UL or DL. In order to use frequency-domain resources more flexibly and improve resource utilization, a TDD system may also work in a full duplex (FD) mode, that is, at a same moment, a same frequency-domain resource is used for both UL and DL, that is, uplink data and downlink data are simultaneously processed on a same frequency-domain resource.

In a TDD system, a frame structure is divided into a DL slot, a UL slot and a flexible slot, and once a frame structure is determined, a user equipment (UE) may transmit and receive data according to the frame structure.

For a UE in an HD (Half Duplex) mode, a base station (such as a gNB) schedules the UE to transmit or receive according to the frame structure. For a UE in an FD (Full Duplex) mode, a base station schedules the UE to transmit, receive or simultaneously transmit and receive according to the frame structure.

As described above, the base station may configure a frame structure, and notify the UE of the frame structure, so that the UE learns of the frame structure, thereby correctly receiving and sending data. From another perspective, after acquiring the frame structure, the UE may learn possible inter-UE interference, thereby reducing interference by using an interference cancellation technology, and improving communication reliability.

In an embodiment, in a TDD system, for a frame structure mainly used for downlink transmission, usually more DL slots are configured, which causes less UL slots, thereby causing a limited uplink transmission rate, increasing a transmission latency of uplink data, increasing a latency of uplink transmission, which is disadvantageous for uplink services.

In an embodiment of the present disclosure, a data transmission method is provided, where a flexible downlink frequency-domain resource and a flexible uplink frequency-domain resource are configured for a UE by using an SBFD time-frequency resource. The uplink data may be transmitted on the uplink frequency-domain resource, that is, the uplink frequency-domain resource can be configured by using a downlink slot or a flexible slot, and the uplink data is transmitted on the uplink frequency-domain resource, so that an uplink transmission rate can be improved, and a transmission latency of the uplink data can be reduced.

Alternatively, a downlink frequency-domain resource may be configured by using an uplink slot or a flexible slot, and downlink data is transmitted by using the downlink frequency-domain resource, so that a downlink transmission rate can be improved, and a transmission latency of the downlink data can be reduced.

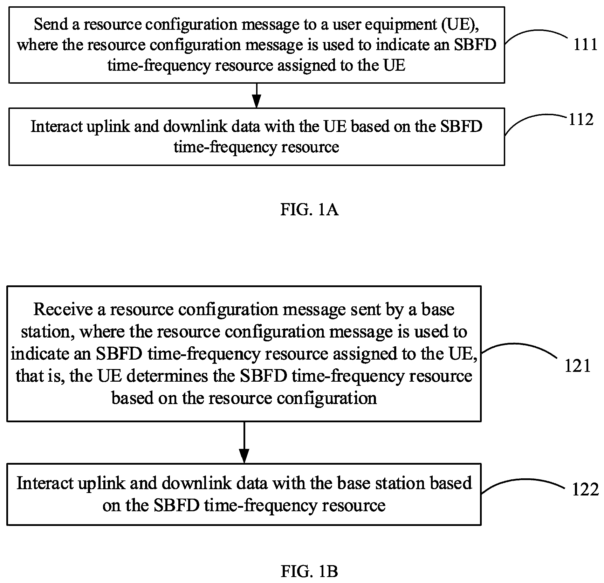

An embodiment of the present disclosure provides a data transmission method, where the data transmission method may be performed by a base station, and referring to FIG. 1A, which is a schematic flowchart of the data transmission method.

Step 111: send a resource configuration message to a user equipment (UE), where the resource configuration message is used to indicate an SBFD time-frequency resource assigned to the UE. For example, the resource configuration message may include configuration information of the SBFD time-frequency resource, and the UE may determine the SBFD time-frequency resource based on the configuration information of the SBFD time-frequency resource.

Step 112: interact uplink and downlink data with the UE based on the SBFD time-frequency resource.

For example, the SBFD time-frequency resource may be configured in a DL slot and/or an F (flexible) slot, and the base station and the UE may interact uplink data based on the SBFD time-frequency resource, that is, the UE sends the uplink data on the SBFD time-frequency resource, and the base station receives the uplink data on the SBFD time-frequency resource.

For another example, the SBFD time-frequency resource may be configured in a UL slot and/or an F slot, and the base station and the UE may interact downlink data based on the SBFD time-frequency resource, that is, the base station sends the downlink data on the SBFD time-frequency resource, and the UE receives the downlink data on the SBFD time-frequency resource.

An embodiment of the present disclosure provides a data transmission method, where the data transmission method may be performed by a user equipment, and referring to FIG. 1B, which is a schematic flowchart of the data transmission method.

Step 121: receive a resource configuration message sent by a base station, where the resource configuration message is used to indicate an SBFD time-frequency resource assigned to the UE. That is, the UE determines the SBFD time-frequency resource based on the resource configuration message.

For example, the resource configuration message may include configuration information of the SBFD time-frequency resource, and the UE may determine the SBFD time-frequency resource based on the configuration information of the SBFD time-frequency resource.

Step 122: interact uplink and downlink data with the base station based on the SBFD time-frequency resource.

For example, the UE and the base station may interact uplink data based on the SBFD time-frequency resource, that is, the UE sends the uplink data on the SBFD time-frequency resource, and the base station receives the uplink data on the SBFD time-frequency resource.

For another example, the UE and the base station may interact downlink data based on the SBFD time-frequency resource, that is, the base station sends the downlink data on the SBFD time-frequency resource, and the UE receives the downlink data on the SBFD time-frequency resource.

It can be seen from the above technical solution that, by configuring the SBFD time-frequency resource, the base station and the UE transmit data by using the SBFD time-frequency resource, the base station sends downlink data to the UE by using the SBFD time-frequency resource, and the UE sends uplink data to the base station by using the SBFD time-frequency resource, and the SBFD time-frequency resource is fully utilized for data transmission.

For example, uplink data may be transmitted by using an SBFD time-frequency resource of a downlink slot, to support uplink data transmission in a TDD system. Resource utilization rate is improved, network coverage and network capacity are improved, and uplink transmission resources and cell coverage are increased. The uplink data transmission reliability and the cell coverage radius are improved, so that the uplink transmission latency is reduced, and the uplink transmission capacity is increased.

Downlink data may be transmitted by using an SBFD time-frequency resource of an uplink slot, to support downlink data transmission in a TDD system. The resource utilization rate is improved, and downlink transmission resources are increased. The downlink data transmission reliability is improved, the downlink transmission latency is reduced, and the downlink transmission capacity is increased.

The above technical solution of the present disclosure will be described below with reference to embodiments.

A frame structure of TDD may be implemented by semi-statically configuring and dynamically indicating. A plurality of SFCs (Slot Format Combination) are defined in highlayer signaling through SFI (Slot Format Indicator). For example, a base station may select slot formats that meet a service requirement, and add the slot formats to the SFC. Some slot formats can be referred to Table 1, where D represents a DL symbol, U represents a UL symbol, and F represents a flexible symbol. Each SFC is identified by a fixed ID and contains one or more slot format types.

Table 1

| Slot format index | Symbols in the slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| ... | ... | | | | | | | | | | | | | |
| 55 | D | D | F | F | F | U | U | U | D | D | D | D | D | D |
| 56 - 254 | Reserved | | | | | | | | | | | | | |
| 255 | UE determines the slot format according to tdd-UL-DL-ConfigurationCommon (uplink and downlink common configuration), tdd-UL-DL-ConfigurationDedicated (uplink and downlink dedicated configuration), and a DCI format. | | | | | | | | | | | | | |

After completing SFI configuration, the base station sends a plurality of slot format combinations to the UE in an RRC (Radio Resource Control) message. After the slot format combinations are configured through RRC signaling, the base station notifies an index of the currently used SFC to the UE in DCI format 2_0 through a periodic PDCCH (Physical Downlink Control Channel). After correctly receiving information of the DCI format 2_0, the UE determines a slot format of each slot in a certain period according to a value of the SFC index.

At this point, the base station and the UE complete the configuration of the frame structure through dynamic indication, and perform uplink and downlink data transmission.

Resource assignment may be divided into time-domain resource assignment and frequency-domain resource assignment (downlink channel is taken as an example).

Time-domain resource assignment: a time-domain resource assignment field in DCI (Downlink Control Information) indicates a time-domain location of a downlink channel. This field includes 4 bits with a value of 0-15, and assuming that the value is m, then m+1 indicates a row index of the time-domain resource assignment table, and information in the row indicates a time-domain resource of the PDSCH (Physical Data Shared Channel).

There are two indication manners: one is to indicate three pieces of information: a slot offset between a PDSCH and a PDCCH scheduling the PDSCH, a start symbol of the PDSCH in a slot, and a length of symbols that the PDSCH occupies.

Another one is to indicate a slot offset between a PDSCH and a PDCCH scheduling the PDSCH, a start and length indicator value (SLIV), and a start symbol of PDSCH and a number of symbols that the PDSCH occupies calculated by the UE based on the SLIV value.

Frequency-domain resource assignment: a frequency-domain resource assignment field in DCI indicates frequency-domain resource assignment of a downlink channel. PDSCH frequency-domain resource assignment is classified into Type 0 and Type 1. Type 0 supports discontinuous resource assignment and a frequency diversity gain is obtained. Type 1 supports continuous resource assignment, which can reduce a number of bits required for this field, and DCI format 1_0 only supports Type 1.

Type 0: for a discontinuous resource assignment type, one resource block group (RBG) is a virtual resource block (VRB) group and consists of P continuous VRBs, and a number thereof is determined by a higher layer parameter rbg-Size and a BWP bandwidth. Under the resource assignment type of Type 0, the frequency-domain resource assignment serves as a bitmap to indicate which RBGs are assigned to the downlink channel. Each bit in the bitmap represents an RBG, a highest bit corresponds to RBG0, and so on. A bit being 1 indicates that the RBG is assigned to the downlink channel, and a bit being 0 indicates that the RBG is not a downlink channel resource.

Type 1: a frequency-domain resource indication field is not used as a bitmap, and indicates an RIV (Resource Indicator Value), and the UE calculates a start RB and a number of occupied RBs of the downlink channel by using the value.

In a TDD system, a frame structure is divided into UL slots, DL slots and F slots with respect to slot. Symbols in a F-slot are configured as UL symbols, DL symbols, and F-symbols for UL, DL, or GP.

Uplink data may be transmitted in a UL slot, a UL symbol or a F symbol in a F slot, and the uplink data cannot be transmitted in a DL slot or a DL symbol in a F slot.

Similarly, downlink data may be transmitted in a DL slot, a DL symbol or a F symbol in a F slot, and the downlink data cannot be transmitted in a UL slot or a UL symbol in a F slot.

Full duplex communication may be implemented by means of SBFD, that is, SBFD time-frequency resources may be configured in time-frequency resources (such as an UL slot, a DL slot, and an F slot). In this way, data in different directions from other time-frequency resources may be transmitted on the SBFD time-frequency resource at a same moment.

For example, an SBFD time-frequency resource is configured in a DL slot, and uplink data is transmitted through the SBFD time-frequency resource, so that the uplink data is transmitted in the DL slot. An SBFD time-frequency resource is configured on a DL symbol in a F slot, and uplink data is transmitted through the SBFD time-frequency resource, so that the uplink data is transmitted on the DL symbol in the F slot.

For another example, a SBFD time-frequency resource is configured in a UL slot, and downlink data is transmitted through the SBFD time-frequency resource, so that the downlink data is transmitted in the UL slot. An SBFD time-frequency resource is configured on a UL symbol in a F slot, and downlink data is transmitted on the SBFD time-frequency resource, so that the downlink data is transmitted on the UL symbol in the F slot.

In an embodiment, the SBFD time-frequency resource may be a time-frequency resource corresponding to SBFD slots or a time-frequency resource corresponding to SBFD symbols. These SBFD symbols may be defined as symbols on which the base station and the UE may be configured with SBFD sub-bands, and on the SBFD sub-bands of the SBFD symbols (referred to as SBFD time-frequency resources), the base station and the UE may perform full-duplex communication. That is, uplink transmission, downlink transmission, or simultaneous uplink and downlink transmissions may be performed on the SBFD time-frequency resource.

The SBFD time-frequency resource may be explicitly indicated as uplink, downlink, or flexible, and when the SBFD time-frequency resource is indicated as flexible, uplink or downlink is flexibly scheduled on the SBFD time-frequency resource. When the SBFD time-frequency resource is not explicitly indicated, it means that Flexible may be used to transmit uplink or downlink data.

Configuration of SBFD slots or SBFD symbols may include: which symbols of DL slots, UL slots, and F slots are used for transmission of SBFD, and periods and starting points for the implementation, etc.

In an embodiment, a SBFD indicated as uplink is referred to as UL-SBFD, that is, the SBFD time-frequency resource is used for uplink. A SBFD indicated as downlink is referred to as DL-SBFD, that is, the SBFD time-frequency resource is used for downlink.

To support FD communication, the SBFD time-frequency resource may be semi-statically configured, for example, semi-statically configured through RRC signaling. The SBFD time-frequency resource may also be dynamically configured, for example, dynamically configured by using DCI.

For example, the SBFD time-frequency resource may be indicated in the TDD mode, and in order to indicate the SBFD time-frequency resource, the SBFD time-frequency resource may be configured in a semi-static configuration manner, and the semi-static configuration is dynamically modified or activated/released through dynamic indication. Alternatively, the SBFD time-frequency-domain resource may be dynamically indicated.

First, activating/releasing is performed on semi-static configuration through dynamic indication. For example, the SBFD time-frequency resource is indicated by using a semi-static resource configuration message, and the semi-statically configured SBFD time-frequency resource is activated/released by using a dynamic indication, and this process is described below with reference to steps.

Step S11: a base station sends a resource configuration message to a UE, and the UE receives the resource configuration message sent by the base station, and determines a SBFD time-frequency resource based on the resource configuration message. The resource configuration message may be a semi-static resource configuration message, and the resource configuration message includes configuration information of the SBFD time-frequency resource.

For example, the semi-static resource configuration message may include frequency-domain resource configuration information and/or time-domain resource configuration information. The frequency-domain resource configuration information is used to determine a frequency-domain resource location of the SBFD time-frequency resource, and the time-domain resource configuration information is used to determine a time-domain resource location of the SBFD time-frequency resource.

For example, the frequency-domain resource location may include a start PRB (Physical Resource Block) and a number of PRBs of the SBFD time-frequency resource. The start PRB indicates which PRB starts to serve as the SBFD time-frequency resource, and the number of PRBs indicates how many consecutive PRBs start from the start PRB to serve as the SBFD time-frequency resource.

For example, the time-domain resource location may include a start symbol and a number of symbols in a slot of the SBFD time-frequency resource. The start symbol indicates which symbol starts to serve as the SBFD time-frequency resource, and the number of symbols indicates a number of consecutive symbols from the start symbol to serve as the SBFD time-frequency resource.

For example, in addition to the start symbol and the number of symbols, the time-domain resource location may further include a start slot and a number of slots of the SBFD time-frequency resource. Alternatively, the time-domain resource location may further include an SBFD aggregation factor of the SBFD time-frequency resource. The start slot indicates which slot starts to serve as the SBFD time-frequency resource, and the number of slots indicates a number of slots from the start slot to serve as the SBFD time-frequency resource.

The SBFD-aggregation factor is used to indicate a number of downlink resources (the downlink resources may be downlink slots and/or downlink symbols) occupied by the SBFD time-frequency resource. Alternatively, the SBFD aggregation factor is used to indicate a number of flexible resources occupied by the SBFD time-frequency resource. Alternatively, the SBFD aggregation factor is used to indicate a number of downlink resources and flexible resources occupied by the SBFD time-frequency resource.

For example, the SBFD aggregation factor may be a slot-level SBFD aggregation factor, and the SBFD aggregation factor is used to indicate a number of downlink slots occupied by the SBFD time-frequency resource, that is, how many downlink slots include a same SBFD time-frequency resources. Alternatively, the SBFD aggregation factor is used to indicate a number of flexible slots occupied by the SBFD time-frequency resource, that is, how many flexible slots include a same SBFD time-frequency resource. Alternatively, the SBFD aggregation factor is used to indicate a number of downlink slots and flexible slots occupied by the SBFD time-frequency resource, that is, how many downlink slots and flexible slots include a same SBFD time-frequency resource.

For example, the SBFD aggregation factor may be a symbol-level SBFD aggregation factor, and the SBFD aggregation factor is used to indicate a number of downlink symbols occupied by the SBFD time-frequency resource, that is, a number of same downlink symbols and a number of groups of same SBFD time-frequency resources. The symbol-level SBFD aggregation factor needs to be a continuous number of groups. Alternatively, the SBFD aggregation factor is used to indicate a number of flexible symbols occupied by the SBFD time-frequency resource. Alternatively, the SBFD aggregation factor is used to indicate a number of downlink symbols and flexible symbols occupied by the SBFD time-frequency resource.

In an embodiment, the semi-static resource configuration message may be an RRC message or other types of semi-static messages, which is not limited. For example, the base station semi-statically configures the SBFD time-frequency resource by using an RRC message, and frequency-domain resource configuration information of the SBFD time-frequency resource carried in the RRC message may be as follows:

SBFD-frequencydomainresourceassignment ::= SEQUENCE {

    locationAndBandwidth-SBFD               INTEGER (0..37949),

    subcarrierSpacing                        SubcarrierSpacing,

    cyclicPrefix                             ENUMERATED {extended}

}

In the above configuration information (which may also be referred to as configuration parameters), the *locationAndbandwidth-SBFD* parameter is used to determine a location and a corresponding bandwidth of the SBFD frequency-domain resource, that is, used as the frequency-domain resource configuration information. A start PRB and a number of PRBs may be determined based on the frequency-domain resource configuration information. For example, the start PRB and the number of PRBs can be obtained by querying a configured table through the frequency-domain resource configuration information.

For example, a calculation manner of a start PRB ($RB_{start}$) and a number of PRBs (N) is as follows:

$$\text{if } (L_{RBs} - 1) \leq \left\lfloor N_{BWP}^{size}/2 \right\rfloor \text{ then}$$

$$RIV = N_{BWP}^{size} (L_{RBs} - 1) + RB_{start}$$

$$\text{else}$$

$$RIV = N_{BWP}^{size} (N_{BWP}^{size} - L_{RBs} + 1) + (N_{BWP}^{size} - 1 - RB_{start})$$

$$\text{where } L_{RBs} \geq 1 \text{ and shall not exceed } N_{BWP}^{size} - RB_{start}.$$

A value of the *locationAndbandwidth-SBFD* parameter is a calculated result of RIV, therefore, the start PRB ($RB_{start}$) and the number of PRBs (N) are obtained based on the value of the *locationAndbandwidth-SBFD* parameter.

In the frequency-domain resource configuration information, the subcarrierSpacing is used to determine a subcarrier spacing, and when the subcarrier bandwidth is consistent with the UL BWP, the subcarrierSpacing may not be configured.

The cyclicPrefix is a cyclic prefix length of OFDM (Orthogonal Frequency Division Multiplexing), and when a symbol of an SBFD time-frequency resource is consistent with a cyclic prefix of a common DL/Flexible OFDM symbol, the cyclicPrefix may not be configured.

In an embodiment, the semi-static resource configuration message may be an RRC message, or may be other types of semi-static messages. When the base station semi-statically configures the SBFD time-frequency resource by using the RRC message, the time-domain resource configuration information of the SBFD time-frequency resource carried in the RRC message may be as follows:

```
SBFD-timedomainresourceassignment ::= SEQUENCE {
    startSymbolAndLength-SBFD              INTEGER (0..127),
    startslotAndLength-SBFD               INTEGER (0..63),
}
```

In the above configuration information (which may also be referred to as configuration parameters), the *startSymbolAndLength-SBFD* parameter is used to determine a symbol location of the SBFD time-domain resource, that is, used as the time-domain resource configuration information. A start symbol and a number of symbols may be determined based on the time-domain resource configuration information. For example, the start symbol and the number of symbols can be obtained by querying a configured table through the time-domain resource configuration information.

The *startslotAndLength-SBFD* parameter is used to determine a slot location of an SBFD time-domain resource, that is, used as time-domain resource configuration information. The start slot and the number of slots are determined based on the time-domain resource configuration information. For example, the start slot and the number of slots can be obtained by querying a configured table through the time-domain resource configuration information.

For example, within a slot, a calculation manner of a start symbol and a number of symbols is as follows:

$$\text{if } (L - 1) \leq 7 \text{ then}$$
$$SLIV = 14 \cdot (L - 1) + S$$
$$\text{else}$$
$$SLIV = 14 \cdot (14 - L + 1) + (14 - 1 - S)$$
$$\text{where } 0 < L \leq 14 - S$$

A value of the *startSymbolAndLength-SBFD* parameter is a calculated result of SLIV, and therefore, the start symbol S and the number of symbols L are obtained based on the value of the *startSymbolAndLength-SBFD* parameter.

Values of the start symbol S and the number of symbols L may also be constrained as shown in Table 2. For example, when the base station determines the start symbol S and the number of symbols L, the constraint needs to be satisfied. After the UE learns of the start symbol S and the number of symbols L, when the UE learns that the constraint is not met, it indicates that the start symbol S and the number of symbols L are incorrect.

Table 2

|  | Normal CP | | | Extended CP | | |
|---|---|---|---|---|---|---|
|  | S | L | S+L | S | L | S+L |
| SBFD SLIV configuration | {0,...,13} | {1,...,14} | {1,...,14} | {0,..., 11} | {1,...,12} | {1,...,12} |

For example, in one period (one period may be P slots, and a value of P may be 5 or 10, which is not limited), a calculation manner of the start slot and the number of slots is as follows:

$$
\begin{aligned}
&\text{if}\ (M-1) \le \lceil P/2 \rceil \ \text{then} \\
&\text{SlotLIV} = P*(M-1)+N \\
&\text{else} \\
&\text{SlotLIV} = P*(P-M+1)+(P-1-N) \\
&\text{Where}\ 0 \le M \le P-N
\end{aligned}
$$

A value of the *startslotAndLength-SBFD* parameter is a calculated result of SlotLIV, and therefore, the start slot N and the number of slots M are obtained based on the value of the *startslotAndLength-SBFD* parameter.

The values of the start slot N and the number of slots M may be constrained as shown in Table 3. For example, when the base station determines the start slot N and the number of slots M, the constraint needs to be satisfied. After the UE learns the start slot N and the number of slots M, when the UE learns that the constraint is not met, it indicates that the start slot N and the number of slots M are incorrect.

Table 3

|  | N | M | M+N |
|---|---|---|---|
| SBFD SlotLIV configuration | {0,...,P-1} | {1,...,P} | {1,...,P} |

In an embodiment, SBFD time-frequency resources may be configured in a downlink slot (DL), and SBFD time-frequency resources may be configured in a flexible slot. When the SBFD time-frequency resource is configured in the downlink slot and the flexible slot, the SBFD time-frequency resource may be configured separately. That is, configuration information carried in the resource configuration message for the downlink slot is different from configuration information carried in the resource configuration message for the flexible slot.

For example, the resource configuration message for the downlink slot may carry the following configuration information:

```
SBFD-frequencydomainresourceassignment-DLslot ::= SEQUENCE {
    locationAndBandwidth-SBFD          INTEGER (0..37949),
    subcarrierSpacing                  SubcarrierSpacing,
    cyclicPrefix                       ENUMERATED { extended }
}
SBFD-timedomainresourceassignment-DLslot ::= SEQUENCE {
    startSymbolAndLength-SBFD          INTEGER (0..127),
    startslotAndLength-SBFD            INTEGER (0..63),
}
```

For example, the resource configuration message for the flexible slot may carry the following configuration information:

```
SBFD-frequencydomainresourceassignment-Fslot ::= SEQUENCE {
        locationAndBandwidth-SBFD              INTEGER (0..37949),
        subcarrierSpacing                      SubcarrierSpacing,
        cyclicPrefix                           ENUMERATED { extended }
    }

SBFD-timedomainresourceassignment-Fslot ::= SEQUENCE {
    startSymbolAndLength-SBFD                      INTEGER (0..127),
    startslotAndLength-SBFD                        INTEGER (0..63),
    }
```

When the SBFD time-frequency resource is configured on the downlink slot and the flexible slot, the downlink slot and the flexible slot may not be distinguished, and the SBFD time-frequency resource may be uniformly configured. That is, configuration information carried in the resource configuration message for the downlink slot is same as configuration information carried in the resource configuration message for the flexible slot.

Step S12: the base station sends a DCI activation message (which may also be replaced with another type of activation message, as long as the message is a dynamic activation message) to the UE, where the DCI activation message is used to enable the UE to activate the SBFD time-frequency resource. The UE receives the DCI activation message sent by the base station, and activates the SBFD time-frequency resource based on the DCI activation message.

In an embodiment, after the base station configures the SBFD time-frequency resource by using an RRC message (for example, a semi-static resource configuration message), the SBFD time-frequency resource may be activated (activated may also be referred to as asserted). That is, after the UE determines the SBFD time-frequency resource based on the RRC message, the SBFD time-frequency resource is directly activated.

In an embodiment, after the base station configures the SBFD time-frequency resource by using the RRC message, the SBFD time-frequency resource will not be immediately activated/asserted, but will be activated through the DCI activation message. That is, after the UE determines the SBFD time-frequency resource based on the RRC message, the UE does not directly activate the SBFD time-frequency resource, and after receiving the DCI activation message sent by the base station, the UE activates the SBFD time-frequency resource based on the DCI activation message. As described above, dynamic DCI may be used to activate the semi-static SBFD time-frequency resource.

Step S13: the base station sends a DCI deactivation message (which may also be replaced with another type of deactivation message) to the UE, where the DCI deactivation message is used to enable the UE to deactivate the SBFD time-frequency resource. The UE receives the DCI deactivation message sent by the base station, and deactivates the SBFD time-frequency resource based on the DCI deactivation message.

In an embodiment, after the SBFD time-frequency resource is activated, when the SBFD time-frequency resource needs to be deactivated, the base station may further send a DCI deactivation message to the UE, and after receiving the DCI deactivation message, the UE may deactivate (also referred to as release) the SBFD time-frequency resource.

In an embodiment, a design manner for the DCI activation message or the DCI deactivation message may include, but is not limited to, the following dynamic DCI design manners, which are only examples instead of limitations.

Manner 1: the DCI activation message or the DCI deactivation message is a first-type DCI message (the first-type DCI message may be an existing DCI message), the first-type DCI message may include a specified field, and the specified field may be a first specified identifier or a second specified identifier. The first specified identifier is used to enable the UE to activate the SBFD time-frequency resource, and the second specified identifier is used to enable the UE to deactivate the SBFD time-frequency resource.

For example, when receiving the DCI activation message, when a specified field of the DCI activation message is the first specified identifier, the UE activates the SBFD time-frequency resource. When receiving the DCI deactivation message, when a specified field of the DCI activation message is the second specified identifier, the UE deactivates the SBFD time-frequency resource.

In the manner 1, activation and deactivation of the SBFD time-frequency resource may be performed by using an existing DCI message (that is, a DCI message in an existing DCI format), where the existing DCI message is referred to as a first-type DCI message, and a CORESET and a search space of a PDCCH corresponding to the first-type DCI message do not need to be reconfigured.

For example, the first-type DCI message may be a DCI message based on DCI format 0_0, or the first-type DCI message may be a DCI message based on DCI format 0_1, or the first-type DCI message may be a DCI message based on DCI format 0_2. That is, in manner 1, activation and deactivation of SBFD time-frequency resources may be supported by using DCI format 0_0, DCI format 0_1, and DCI format 0_2.

Existing IEs (Information Element) of the first type of DCI message may include fields (i.e., specified fields) such as *HARQ (Hybrid Automatic Repeat Request) process number, Redundancy version,* and modulation and coding scheme, and activation and deactivation of SBFD time-frequency resources may be indicated based on a special indication combination of these fields. Certainly, this is only a few examples of the specified fields, and the IEs included in the DCI format 0_0/0_1/0_2 can be combined and specially set to indicate activation and deactivation.

For example, referring to Table 4 and Table 5, which are examples of first-type DCI messages (DCI messages using DCI format 0_0, DCI format 0_1, and DCI format 0_2), activation of SBFD time-frequency resources may be implemented based on the first-type DCI messages. In Table 4, the specified field is a *HARQ process number* and a *Redundancy version,* and when the *HARQ process number* is all 1 and the *Redundancy version* is all 0, it indicates that the specified field is the first specified identifier. In Table 5, the specified field is a *Redundancy version,* and when the *Redundancy version* is all 1, it indicates that the specified field is the first specified identifier.

Table 4

|  | DCI format 0_0/0_1/0_2 |
|---|---|
| HARQ process number | set to all '1's |
| Redundancy version | set to all '0's |

Table 5

|  | DCI format 0_0/0_1/0_2 |
|---|---|
| Redundancy version | set to all '1's |

For example, referring to Table 6 and Table 7, which are examples of first-type DCI messages (DCI messages using DCI format 0_0, DCI format 0_1, and DCI format 0_2), activation of SBFD time-frequency resources may be implemented based on the first-type DCI messages. In Table 6, the specified field is a *HARQ process number* and a *Redundancy version,* and when the *HARQ process number* is all 0 and the *Redundancy version* is all 1, it indicates that the specified field is the second specified identifier. In Table 7, the specified field is *Redundancy version* and Modulation and coding scheme, when *Redundancy version* is all 1 and Modulation and coding scheme is all 1, it indicates that the specified field is the second specified identifier.

Table 6

|  | DCI format 0_0/0_1/0_2 |
|---|---|
| HARQ process number | set to all '0's |
| Redundancy version | set to all '1's |

Table 7

|  | DCI format 0_0/0_1/0_2 |
|---|---|
| Redundancy version | set to all '1's |
| Modulation and coding scheme | set to all '1's |

Manner 2: the DCI activation message or the DCI deactivation message is a first-type DCI message (the first-type DCI message may be an existing DCI message), the first-type DCI message may include a reserved bit, and the reserved bit may take a first value (for example, 1) or a second value (for example, 0). The first value is used to enable the UE to activate the SBFD time-frequency resource, and the second value is used to enable the UE to deactivate the SBFD time-frequency resource.

For example, when the UE receives the DCI activation message, and when a reserved bit of the DCI activation message takes the first value, the SBFD time-frequency resource may be activated. When the UE receives the DCI deactivation message, and when a reserved bit of the DCI deactivation message takes the second value, the SBFD time-frequency resource may be deactivated.

In the manner 2, activation and deactivation of the SBFD time-frequency resource may be performed by using an existing DCI message (that is, a DCI message in an existing DCI format), where the existing DCI message is referred to as a first-type DCI message, and a CORESET and a search space of a PDCCH corresponding to the first-type DCI message do not need to be reconfigured.

For example, the first-type DCI message may be a DCI message based on DCI format 4_0, or the first-type DCI message may be a DCI message based on DCI format 4_1. That is, in the manner 2, activation and deactivation of the SBFD time-frequency resource may be supported by using the DCI format 4_0 and the DCI format 4_1.

The first-type DCI message may include a reserved bit, and for the first-type DCI message with the reserved bit, the reserved bit may be used to indicate activation and deactivation of the SBFD time-frequency resource.

For example, referring to Table 8, which shows an example of a first-type DCI message (a DCI message using DCI format 4_0 and DCI format 4_1). Activation and deactivation of the SBFD time-frequency resource may be implemented based on the first-type DCI message, that is, activation and deactivation of the SBFD time-frequency resource are supported by using 1 bit (for example, a first bit or a last bit) in reserved bits of the first-type DCI message.

In Table 8, when the *IE SBFD resource activation/release* (that is, 1 bit in the reserved bits of the first-type DCI message) is set to 1, it indicates to activate the SBFD time-frequency resource. When the *IE SBFD resource activation/release* is set to 0, it indicates to deactivate the SBFD time-frequency resource.

Table 8

|  | DCI format 4 0/4 1 |
|---|---|
| SBFD resource activation/release | set to 1 for activation<br>set to 0 for release |

Manner 3: the DCI activation message or the DCI deactivation message is a second-type DCI message (the second-type DCI message may be a new DCI message, that is, a DCI message specially designed for activation/deactivation of the SBFD time-frequency resource), the second-type DCI message may include a resource field, and the resource field is used to indicate activation or deactivation of the SBFD time-frequency resource. The resource field a third value or a fourth value, the third value is used to enable the UE to activate the SBFD time-frequency resource, and the fourth value is used to enable the UE to deactivate the SBFD time-frequency resource.

For example, when the UE receives the DCI activation message, and when a resource field of the DCI activation message takes a third value (for example, 1), the UE activates the SBFD time-frequency resource. When the UE receives the DCI deactivation message, and when a resource field of the DCI deactivation message takes a fourth value (for example, 0), the UE deactivates the SBFD time-frequency resource.

In the manner 3, a new DCI message (that is, a DCI message in a new DCI format) may be used to activate and deactivate the SBFD time-frequency resource, and the new DCI message is referred to as a second-type DCI message. The CORESET (i.e., the frequency-domain resource location) and the search space (i.e., the time-domain resource location) of the PDCCH corresponding to the second-type DCI message need to be reconfigured, that is, a new DCI format message is designed, including the CORESET and the search space resource of the PDCCH corresponding to the DCI message, and the IE (Information Element) included in the DCI message.

In the manner 3, the base station needs to determine a resource location (for example, a frequency-domain resource location and a time-domain resource location) of the second-type DCI message, and send the resource location of the second-type DCI message to the UE. Based on this, the base station sends the second-type DCI message at the resource location, and the UE receives the second-type DCI message at the resource location.

For example, an example of the resource location (for example, a frequency-domain resource location CORESET and a time-domain resource location search space) of the second-type DCI message can be referred to the following form. The base station sends the resource location to the UE by using the RRC message, and the UE detects the PDCCH (used for activation/deactivation of the SBFD time-frequency resource) in the corresponding CORESET and search space according to the resource location, that is, receives the second-type DCI message.

```
ControlResourceSet-SBFD ::=                    SEQUENCE {
    controlResourceSetId                       ControlResourceSetId,
    frequencyDomainResources                    BIT STRING (SIZE (45)),
    duration                   INTEGER (1..maxCoReSetDuration),
    cce-REG-MappingType                         CHOICE {
        interleaved                             SEQUENCE {
            reg-BundleSize                  ENUMERATED {n2, n3, n6},
            interleaverSize                 ENUMERATED {n2, n3, n6},
            shiftIndex                  INTEGER(0..maxNrofPhysicalResourceBlocks-1)
            OPTIONAL -- Need S
        },
        nonInterleaved                          NULL
},

SearchSpace-SBFD ::=                           SEQUENCE {
    searchSpaceId                              SearchSpaceId,
    monitoringSlotPeriodicityAndOffset          CHOICE {
        sl1                                    NULL,
        sl2                                    INTEGER (0..1),
        sl4                                    INTEGER (0..3),
        sl5                                    INTEGER (0..4),
        sl8                                    INTEGER (0..7),
        sl10                                   INTEGER (0..9),
        sl16                                   INTEGER (0..15),
        sl20                                   INTEGER (0..19),
        sl40                                   INTEGER (0..39),
        sl80                                   INTEGER (0..79),
        sl160                                  INTEGER (0..159),
        sl320                                  INTEGER (0..319),
        sl640                                  INTEGER (0..639),
        sl1280                                 INTEGER (0..1279),
```

```
            sl2560                          INTEGER (0..2559)

            sl32                            INTEGER (0..31),

            sl64                            INTEGER (0..63),

            sl128                           INTEGER (0..127),

            sl5120                          INTEGER (0..5119),

            sl10240                         INTEGER (0..10239),

            sl20480                         INTEGER (0..20479)

    }

OPTIONAL,      -- Cond Setup4

            monitoringSymbolsWithinSlot          BIT STRING (SIZE (14))

OPTIONAL,      -- Cond Setup

monitoringSlotsWithinSlotGroup       CHOICE {

            slotGroupLength4                     BIT STRING (SIZE (4)),

            slotGroupLength8                     BIT STRING (SIZE (8))

    }

OPTIONAL,      -- Need R

            duration                        INTEGER (4..20476)

nrofCandidates                               SEQUENCE {

aggregationLevel1          ENUMERATED {n0, n1, n2, n3, n4, n5, n6, n8},

aggregationLevel2          ENUMERATED {n0, n1, n2, n3, n4, n5, n6, n8},

aggregationLevel4          ENUMERATED {n0, n1, n2, n3, n4, n5, n6, n8},

aggregationLevel8          ENUMERATED {n0, n1, n2, n3, n4, n5, n6, n8},

aggregationLevel16         ENUMERATED {n0, n1, n2, n3, n4, n5, n6, n8}

    }

OPTIONAL,      -- Cond Setup
```

The second-type DCI message may include a resource bit (for example, 1 bit), and the resource bit may be used to indicate activation and deactivation of the SBFD time-frequency resource. For example, referring to Table 8, which is an example of the second-type DCI message, activation and deactivation of the SBFD time-frequency resource may be implemented based on the second-type DCI message.

In Table 8, when the *IE SBFD resource activation/release* (that is, the resource bit of the second-type DCI message) is set to 1, it indicates to activate the SBFD time-frequency resource. When the *IE SBFD resource activation/release* is set to 0, it indicates to deactivate the SBFD time-frequency resource.

In an embodiment, for a DCI activation message or a DCI deactivation message (for example, the DCI activation message or the DCI deactivation message in Manner 1, Manner 2, and Manner 3), before sending the DCI activation message or the DCI deactivation message to the UE, the base station may further scramble the DCI activation message or the DCI deactivation message, and a scrambling manner is not limited. After receiving the DCI activation message or the DCI deactivation message sent by the base station, the UE may further descramble the DCI activation message or the DCI deactivation message, and a descrambling manner is not limited.

For example, the base station may scramble the DCI activation message or the DCI deactivation message by using a cell-radio network temporary identifier (C-RNTI), the UE may descramble the DCI activation message or the DCI deactivation message by using the C-RNTI, where the C-RNTI is an RNTI for the UE, and C-RNTIs of different UEs are different. For example, the DCI activation message or the DCI deactivation message in manner 1 is scrambled through the C-RNTI. For example, the DCI activation message or the DCI deactivation message in manner 2 is scrambled through the C-RNTI. For example, the DCI activation message or the DCI deactivation message in manner 3 is scrambled through the C-RNTI.

The base station scrambles the DCI activation message or the DCI deactivation message by using a group-radio network temporary identifier (G-RNTI), and the UE descrambles the DCI activation message or the DCI deactivation message by using the G-RNTI, where the G-RNTI is an RNTI for a cluster group to which the UE belongs, and G-RNTIs of different cluster groups are different. For example, the DCI activation message or the DCI deactivation message in manner 1 is scrambled through the G-RNTI. For example, the DCI activation message or the DCI deactivation message in manner 2 is scrambled through the G-RNTI. For example, the DCI activation message or the DCI deactivation message in manner 3 is scrambled through the G-RNTI.

The base station may scramble the DCI activation message or the DCI deactivation message by using the SBFD-RNTI, and the UE may descramble the DCI activation message or the DCI deactivation message by using the SBFD-RNTI, where the SBFD-RNTI is an RNTI for the SBFD time-frequency resource. For example, the DCI activation message or the DCI deactivation message in manner 1 is scrambled through the SBFD-RNTI. The DCI activation message or the DCI deactivation message in manner 2 is scrambled through the SBFD-RNTI. The DCI activation message or the DCI deactivation message in manner 3 is scrambled through the SBFD-RNTI.

To scramble the DCI activation message or the DCI deactivation message by using the SBFD-RNTI, a value and a use manner of the SBFD-RNTI may be further designed. For example, before scrambling the DCI activation message or the DCI deactivation message by using the SBFD-RNTI, the base station may further send the SBFD-RNTI to the UE by using a scrambling message. Before descrambling the DCI activation message or the DCI deactivation message by using the SBFD-RNTI, the UE may further receive a scrambling message sent by the base station, where the scrambling message includes the SBFD-RNTI. The scrambling message may be an RRC message (for example, an RRC broadcast message or an RRC dedicated message) or a MAC-CE message, or may be another type of message, which is not limited, as long as the scrambling message includes the SBFD-RNTI.

For values of the SBFD-RNTI, refer to Table 9 and Table 10. In Table 9, the SBFD-RNTI shares RNTI values with an existing RNTI. In Table 10, a dedicated RNTI is assigned for the SBFD-RNTI.

Table 9

| Value (hexa-decimal) | RNTI |
|---|---|
| 0001-FFF2 | RA-RNTI, MSGB-RNTI, Temporary C-RNTI, C-RNTI, CI-RNTI, MCS-C-RNTI, CS-RNTI, TPC-PUCCH-RNTI, TPC-PUSCH-RNTI, TPC-SRS-RNTI, INT-RNTI, SFI-RNTI, SP-CSI-RNTI, PS-RNTI, SL-RNTI, SL-CS-RNTI, SL Semi-Persistent Scheduling V-RNTI, AI-RNTI, G-RNTI, G-CS-RNTI, and CG-SDT-CS-RNTI, SBFD-RNTI |

Table 10

| Value (hexa-decimal) | RNTI |
|---|---|
| FFF3-FFFB | SBFD-RNTI |

For example, when a dedicated RNTI is assigned to the SBFD-RNTI, the SBFD-RNTI may be pre-stored in the base station and the UE, that is, the SBFD-RNTI does not need to be notified to the UE by using a scrambling message.

Second, activating/releasing is performed on semi-static configuration through dynamic indication.

For example, a pattern list of the SBFD time-frequency resource is indicated by using a semi-static resource configuration message, and a group of resource configuration information is dynamically indicated, and then the SBFD time-frequency resource of the group of resource configuration information is activated/released by using a dynamic indication. The process will be described with reference to following steps.

Step S21: a base station sends a resource configuration message to a UE, and the UE receives the resource configuration message sent by the base station, where the resource configuration message may be a semi-static resource configuration message, and the resource configuration message includes configuration information of the SBFD time-frequency resource. For example, the semi-static resource configuration message includes a pattern list of the SBFD time-frequency resource, the pattern list includes a plurality of groups of resource configuration information, and each group of resource configuration information includes frequency-domain resource configuration information and/or time-domain resource configuration information. The frequency-domain resource configuration information is used to determine a frequency-domain resource location of the SBFD time-frequency resource, and the time-domain resource configuration information is used to determine a time-domain resource location of the SBFD time-frequency resource.

For example, the frequency-domain resource location may include a start PRB and a number of PRBs of the SBFD time-frequency resource. The start PRB indicates which PRB starts to serve as the SBFD time-frequency resource, and the number of PRBs indicates how many consecutive PRBs start from the start PRB to serve as the SBFD time-frequency resource.

For example, the time-domain resource location may include a start symbol and a number of symbols in a slot of the SBFD time-frequency resource. The start symbol indicates which symbol starts to serve as the SBFD time-frequency resource, and the number of symbols indicates a number of consecutive symbols from the start symbol to serve as the SBFD time-frequency resource.

For example, in addition to the start symbol and the number of symbols, the time-domain resource location may further include a start slot and a number of slots of the SBFD time-frequency resource. Alternatively, the time-domain resource location may further include an SBFD aggregation factor of the SBFD time-frequency resource. The start slot indicates which slot starts to serve as the SBFD time-frequency resource, and the number of slots indicates a number of slots from the start slot to serve as the SBFD time-frequency resource.

The SBFD-aggregation factor is used to indicate a number of downlink resources (the downlink resources may be downlink slots and/or downlink symbols) occupied by the SBFD time-frequency resource. Alternatively, the SBFD aggregation factor is used to indicate a number of flexible resources occupied by the SBFD time-frequency resource. Alternatively, the SBFD aggregation factor is used to indicate a number of flexible resources occupied by the SBFD time-frequency resource.

In an embodiment, the semi-static resource configuration message may be an RRC message or other types of semi-static messages, which is not limited. For example, the base station semi-statically configures a pattern list of the SBFD time-frequency resource by using an RRC message, and may separately configure a pattern list of common DL/F symbols and a pattern list of SBFD symbols by using the RRC message. The plurality of groups of resource configuration information carried in the pattern list may be as follows:

```
SBFD-ConfigInfo ::=                        SEQUENCE {
       SBFDConfigInfoList                         SEQUENCE (SIZE (1..maxSBFD
ConfigInfo)) OF ConfigInfo,
SBFD-frequencydomainresourceassignment-DLslot ::= SEQUENCE {
       locationAndBandwidth-SBFD           INTEGER (0..37949),
       subcarrierSpacing                          SubcarrierSpacing,
       cyclicPrefix              ENUMERATED { extended }
}
SBFD-timedomainresourceassignment-DLslot ::= SEQUENCE {
Ks                                         INTEGER(0..32)
startSymbolAndLength-SBFD                  INTEGER (0..127),
startslotAndLength-SBFD                   INTEGER (0..63),
SBFD-Periodicity                 ENUMERATED { ms5, ms10, ms20, ms40,
ms80, ms160, spare2, spare1 }
SBFD-aggregationfactor                     ENUMERATED { n1, n2, n3, n4,
n5, n6, n7, n8,n9 }
}
SBFD-frequencydomainresourceassignment-Fslot ::= SEQUENCE {
       locationAndBandwidth-SBFD           INTEGER (0..37949),
       subcarrierSpacing                          SubcarrierSpacing,
       cyclicPrefix              ENUMERATED { extended }
}
SBFD-timedomainresourceassignment-Fslot ::= SEQUENCE {
Ks                                         INTEGER(0..32)
startSymbolAndLength-SBFD                  INTEGER (0..127),
startslotAndLength-SBFD                   INTEGER (0..63),
SBFD-aggregationfactor                     ENUMERATED { n1, n2, n3, n4, n5, n6, n7,
n8,n9 }
SBFD-Periodicity                 ENUMERATED { ms5, ms10, ms20, ms40,
ms80, ms160, spare2, spare1 }
}


                           }
```

Step S22: the base station sends a DCI indication message to the UE, where the DCI indication message is used to enable the UE to assert/implement a first group in the pattern list (the first group of resource configuration information is any group of resource configuration information in all groups of resource configuration information in the pattern list). The UE receives the DCI indication message sent by the base station, and asserts the first group of resource configuration information in the pattern list based on the DCI indication message.

In an embodiment, after configuring the pattern list of the SBFD time-frequency resource by using the RRC message (that is, the semi-static configuration message), to enable the UE to learn of which group of resource configuration information to be used, and further to determine the SBFD time-frequency resource based on the group of resource configuration information, the base station may further send a DCI indication message to the UE.

After the UE receives the DCI indication message, the DCI indication message is used to indicate a group of resource configuration information (denoted as a first group of resource configuration information) in the pattern list, the UE can assert the first group of resource configuration information in the pattern list, and determine the SBFD time-frequency resource based on the group of resource configuration information.

For example, since the group of resource configuration information includes frequency-domain resource configuration information and/or time-domain resource configuration information, the UE may determine a frequency-domain resource location of the SBFD time-frequency resource based on the frequency-domain resource configuration information, and determine a time-domain resource location of the SBFD time-frequency resource based on the time-domain resource configuration information.

A length of a parameter (the parameter is used to indicate a group of resource configuration information in the pattern list) carried in the DCI indication message may be determined based on a length of the pattern list. Assuming that a length of the pattern list is 2, a length of the parameter carried in the DCI indication message is 1, for example, the parameter being 0 indicates a first group of resource configuration information in the pattern list, and the parameter being 1 indicates a second group of resource configuration information in the pattern list. Assuming that a length of the pattern list is 4, a length of the parameter carried in the DCI indication message is 2, for example, the parameter being 00 indicates a first group of resource configuration information in the pattern list; the parameter being 01 indicates a second group of resource configuration information in the pattern list; the parameter being 10 indicates a third group of resource configuration information in the pattern list; the parameter being 11 indicates a fourth group of resource configuration information in the pattern list.

In an embodiment, before sending the DCI indication message to the UE, the base station may further scramble the DCI indication message. After receiving the DCI indication message sent by the base station, the UE may further descramble the DCI indication message.

For example, the base station may scramble the DCI indication message by using a C-RNTI, and the UE may descramble the DCI indication message by using the C-RNTI. The base station may scramble the DCI indication message by using a G-RNTI, and the UE may descramble the DCI indication message by using the G-RNTI. The base station may scramble the DCI indication message by using a SBFD-RNTI, and the UE may descramble the DCI indication message by using the SBFD-RNTI.

In an embodiment, after receiving the DCI indication message, the UE may assert a first group of resource configuration information in the pattern list based on the DCI indication message. For example, after receiving the DCI indication message, the UE immediately asserts the first group of resource configuration information in the pattern list. Alternatively, the UE may first determine an assertion time, and assert the first group of resource configuration information in the pattern list at the assertion time.

The assertion time of the resource configuration information may be determined in a following manner.

Manner A: the UE determines an assertion time based on a next frame of a current frame carrying the DCI indication message, and asserts the first group of resource configuration information in the pattern list at the assertion time. For example, after receiving the DCI indication message, the UE determines a start time of the next frame of the current frame carrying the DCI indication message as the assertion time.

For example, when the first group of resource configuration information includes time-domain resource configuration information, and the time-domain resource configuration information includes *startSymbolAndLength-SBFD* and *startslotAndLength-SBFD,* that is, the *startSymbolAndLength-SBFD* is used to determine a start symbol and a number of symbols of the SBFD time-frequency resource, and the *startslotAndLength-SBFD* is used to determine a start slot and a number of slots of the SBFD time-frequency resource, then a start moment of the next frame of the current frame carrying the DCI indication message may be used as the assertion time.

Manner B: the UE determines an assertion time based on a system frame number and a SBFD time-frequency resource period parameter, and asserts the first group of resource configuration information in the pattern list at the assertion time. For example, after receiving the DCI indication message, the UE determines a moment when the system frame number SFN mod periodicity = n as the assertion time.

The periodicity indicates the SBFD time-frequency resource periodicity parameter, and the SBFD time-frequency resource periodicity parameter may be located in the first group of resource configuration information, or may be carried in the DCI indication message. SFN mod periodicity = n indicates that a modulo operation result of a system frame number (SFN) on an SBFD time-frequency resource periodicity parameter is n, and for a system frame number satisfying the condition, a start moment of a system frame corresponding to the system frame number is used as the assertion time. A value of n may be 0, 1, ···, n-1, for example, the value of n is preferably 0.

For example, when the first group of resource configuration information includes time-domain resource configuration information, and the time-domain resource configuration information includes *startSymbolAndLength-SBFD* and *startslotAndLength-SBFD,* the assertion time may be determined based on the system frame number and the SBFD time-frequency resource periodicity parameter.

Manner C: the UE determines an assertion time based on a system frame number, and asserts the first group of resource configuration information in the pattern list at the assertion time. For example, after receiving the DCI indication message, the UE determines a moment when the system frame number SFN = m as the assertion time. SFN = m indicates that the system frame number SFN is m, and for a system frame number satisfying the condition, a start moment of a system frame corresponding to the system frame number is used as the assertion time. A value of m may be 0, 1,···, m - 1, for example, the value of m is preferably 0·

For example, when the first group of resource configuration information includes time-domain resource configuration information, and the time-domain resource configuration information includes *startSymbolAndLength-SBFD* and *startslotAndLength-SBFD,* the assertion time may be determined based on the system frame number, for example, a moment at which the system frame number SFN = m is used as the assertion time.

Manner D: the UE acquires an assertion interval duration, where the assertion interval duration may indicate an interval duration between a receiving moment of the DCI indication message and an assertion time, and the assertion time is used to indicate an assertion time of the first group of resource configuration information in the pattern list. Then, the UE may determine the assertion time based on the assertion interval duration, and assert the first group of resource configuration information in the pattern list at the assertion time.

For example, when the base station sends the DCI indication message to the UE, the DCI indication message may include the assertion interval duration, and therefore, the UE may acquire the assertion interval duration in the DCI indication message. Alternatively, the assertion interval duration is located in a first group of resource configuration information (pattern list), so that the UE may acquire the assertion interval duration from the first group of resource configuration information. Certainly, the UE may alternatively acquire the assertion interval duration in another manner, for example, the assertion interval duration may be a default value, and the acquiring manner is not limited.

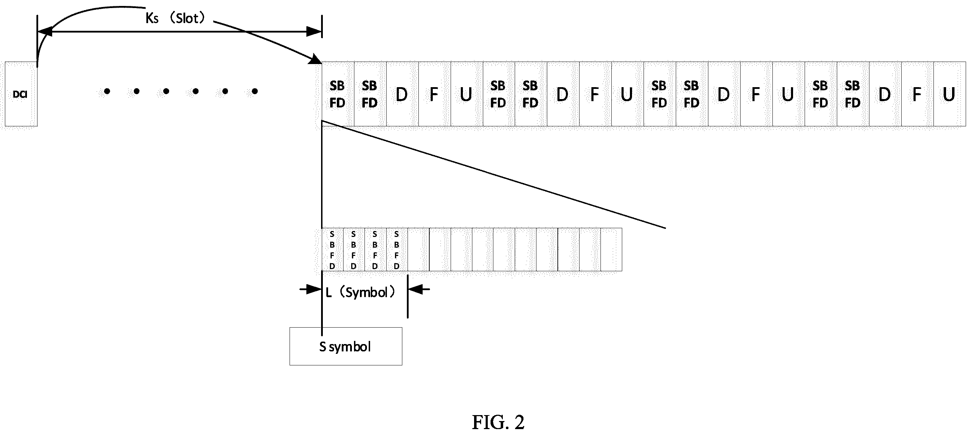

For example, referring to FIG. 2, FIG. 2 is a schematic scheduling diagram of configuring SBFD time-frequency resources through DCI, Ks is used to indicate the assertion interval duration, a unit of the assertion interval duration Ks may be a slot, a subframe, or a frame, and following descriptions take a slot as an example, and implementations of a subframe or a frame are similar.

After receiving the DCI indication message, the UE may determine a sum of a slot corresponding to the receiving moment of the DCI indication message (that is, a slot after the receiving moment of the DCI indication message) and the assertion interval duration Ks as the assertion time, that is, a slot after the assertion interval duration Ks after the slot corresponding to the receiving moment is the assertion time.

Referring to FIG. 2, the base station configures an SBFD time-frequency resource through a DCI indication message, including an assertion interval duration Ks, a SBFD time-frequency resource period parameter, a start slot, a length of slots, and the like.

For example, when the first group of resource configuration information includes time-domain resource configuration information, and the time-domain resource configuration information includes *startSymbolAndLength-SBFD* and SBFD-aggregation factor (SBFD aggregation factor), the UE may acquire the assertion interval duration, and determine the assertion time based on the assertion interval duration.

In this case, the UE may determine a location of the SBFD time-frequency resource based on the assertion interval duration Ks, the *SBFD-aggregationfactor,* and the *startSymbolAndLength-SBFD.*

For example, the UE determines the assertion time based on the assertion interval duration Ks. From the assertion time, slots of the SBFD time-frequency resource is determined based on the *SBFD-aggregationfactor.* When the *SBFD-aggregationfactor* is used to indicate a number of downlink slots occupied by the SBFD time-frequency resource, a number *SBFD-aggregationfactor* of downlink slots are determined as slots of the SBFD time-frequency resource. When the *SBFD-aggregationfactor* is used to indicate a number of Flexible slots occupied by the SBFD time-frequency resource, a number *SBFD-aggregationfactor* of Flexible slots are determined as slots of the SBFD time-frequency resource. When the *SBFD-aggregationfactor* is used to indicate a number of downlink slots and Flexible slots occupied by the SBFD time-frequency resource, a number *SBFD-aggregationfactor* of downlink slots and Flexible slots are determined as slots of the SBFD time-frequency resource.

For slots of the SBFD time-frequency resource, a starting symbol and a number of symbols in the slot may be determined based on *startSymbolAndLength-SBFD.* As described above, the SBFD time-frequency resource is determined based on the start slot and the number of slots of the SBFD time-frequency resource, and the start symbol and the number of symbols in the slot of the SBFD time-frequency resource.

In an embodiment, an IE design in the DCI indication message can be referred to the following:

SBFD time-frequency resource assignment

The bitwidth for this field is determined as $\lceil log_2(I) \rceil$ bits, where I is the number of entries in the higher layer parameter SBFD-ConfigInfoList;

Step S23: the base station sends a DCI activation message (which may also be replaced with another type of activation message and a dynamic activation message) to the UE, where the DCI activation message is used to enable the UE to activate the SBFD time-frequency resource corresponding to the first group of resource configuration information. The UE receives the DCI activation message sent by the base station, and activates, based on the DCI activation message, the SBFD time-frequency resource corresponding to the first group of resource configuration information.

In an embodiment, after the base station enables the UE to assert the first group of resource configuration information in the pattern list by using the DCI indication message, the UE may activate the SBFD time-frequency resource corresponding to the first group of resource configuration information.

Alternatively, after the base station enables the UE to assert the first group of resource configuration information in the pattern list by using the DCI indication message, the UE does not immediately activate the SBFD time-frequency resource corresponding to the first group of resource configuration information, but performs activation by using the DCI activation message. That is, after receiving the DCI activation message sent by the base station, the UE activates, based on the DCI activation message, the SBFD time-frequency resource corresponding to the first group of resource configuration information.

Step S24: the base station sends a DCI deactivation message (which may also be replaced with another type of deactivation message) to the UE, where the DCI deactivation message is used to enable the UE to deactivate the SBFD time-frequency resource. The UE receives the DCI deactivation message sent by the base station, and deactivates the SBFD time-frequency resource based on the DCI deactivation message.

In an embodiment, after the SBFD time-frequency resource is activated, when the SBFD time-frequency resource needs to be deactivated, the base station may further send a DCI deactivation message to the UE, and after receiving the DCI deactivation message, the UE may deactivate (also referred to as release) the SBFD time-frequency resource.

In an embodiment, a design manner for the DCI activation message or the DCI deactivation message may include, but is not limited to, the following dynamic DCI design manners, which are only examples instead of limitations.

Manner 1: the DCI activation message or the DCI deactivation message is a first-type DCI message, the first-type DCI message includes a specified field, and the specified field is a first specified identifier or a second specified identifier. The first specified identifier is used to enable the UE to activate the SBFD time-frequency resource, and the second specified identifier is used to enable the UE to deactivate the SBFD time-frequency resource. For example, when receiving the DCI activation message, when a specified field of the DCI activation message is the first specified identifier, the UE activates the SBFD time-frequency resource. When receiving the DCI deactivation message, when a specified field of the DCI activation message is the second specified identifier, the UE deactivates the SBFD time-frequency resource.

Manner 2: the DCI activation message or the DCI deactivation message is a first-type DCI message, the first-type DCI message may include a reserved bit, and the reserved bit takes a first value (for example, 1) or a second value (for example, 0). The first value is used to enable the UE to activate the SBFD time-frequency resource, and the second value is used to enable the UE to deactivate the SBFD time-frequency resource. For example, when the UE receives the DCI activation message, and when a reserved bit of the DCI activation message takes the first value, the SBFD time-frequency resource may be activated. When the UE receives the DCI deactivation message, and when a reserved bit of the DCI deactivation message takes the second value, the SBFD time-frequency resource may be deactivated.

Manner 3: the DCI activation message or the DCI deactivation message is a second-type DCI message, the second-type DCI message includes a resource field, and the resource field is used to indicate to activate or deactivate the SBFD time-frequency resource. The resource field takes a third value or a fourth value, the third value is used to enable the UE to activate the SBFD time-frequency resource, and the fourth value is used to enable the UE to deactivate the SBFD time-frequency resource. When receiving the DCI activation message, and when the resource field of the DCI activation message is the third value, the UE activates the SBFD time-frequency resource. When receiving the DCI deactivation message, and when the resource field of the DCI deactivation message is the fourth value, the UE deactivates the SBFD time-frequency resource.

In an embodiment, before sending the DCI activation message or the DCI deactivation message to the UE, the base station may further scramble the DCI activation message or the DCI deactivation message. After receiving the DCI activation message or the DCI deactivation message sent by the base station, the UE may further descramble the DCI activation message or the DCI deactivation message.

For example, the base station may scramble the DCI activation message or the DCI deactivation message by using a C-RNTI, and the UE may descramble the DCI activation message or the DCI deactivation message by using the C-RNTI. The base station may scramble the DCI activation message or the DCI deactivation message by using a G-RNTI, and the UE may descramble the DCI activation message or the DCI deactivation message by using the G-RNTI. The base station may scramble the DCI activation message or the DCI deactivation message by using a SBFD-RNTI, and the UE may descramble the DCI activation message or the DCI deactivation message by using the SBFD-RNTI.

For steps S23 and S24, reference may be made to steps S12 and S13, and details are not repeated herein.

Third, the semi-static configuration is dynamically modified by a dynamic indication. For example, after the SBFD time-frequency resource is indicated by using the semi-static resource configuration message, when the SBFD time-frequency resource changes, the semi-statically configured SBFD time-frequency resource may be dynamically modified by using a dynamic indication.

In an embodiment, after the base station indicates the SBFD time-frequency resource by using the semi-static resource configuration message, when the SBFD time-frequency resource changes, the base station may send a dynamic resource configuration message to the UE, where the dynamic resource configuration message is used to indicate a changed SBFD time-frequency resource assigned to the UE. The UE receives the dynamic resource configuration message sent by the base station, and determines the changed SBFD time-frequency resource based on the dynamic resource configuration message.

In an embodiment, the dynamic resource configuration message may include frequency-domain resource configuration information and/or time-domain resource configuration information. The frequency-domain resource configuration information is used to determine a frequency-domain resource location of the SBFD time-frequency resource, and the time-domain resource configuration information is used to determine a time-domain resource location of the SBFD time-frequency resource.

For example, the frequency-domain resource location may include a start PRB and a number of PRBs of the SBFD time-frequency resource. The time-domain resource location may include a start symbol and a number of symbols in a slot of the SBFD time-frequency resource.

In addition to the start symbol and the number of symbols, the time-domain resource location may further include a start slot and a number of slots of the SBFD time-frequency resource. Alternatively, the time-domain resource location may further include an SBFD aggregation factor of the SBFD time-frequency resource. The SBFD aggregation factor is used to indicate a number of downlink resources occupied by the SBFD time-frequency resource, or the SBFD aggregation factor is used to indicate a number of flexible resources occupied by the SBFD time-frequency resource, or the SBFD aggregation factor is used to indicate a number of downlink resources and a number of flexible resources occupied by the SBFD time-frequency resource.

In an embodiment, the dynamic resource configuration message may be a DCI message or other types of dynamic messages, which is not limited. For example, the base station dynamically configures the SBFD time-frequency resource and the period by using the DCI message, and the configuration information and the period of the SBFD time-frequency resource carried in the DCI message may be as follows:

Frequency-domain resource assignment -SBFD for DL 16 bits

Time-domain resource assignment for SBFD for DL– 8 bit or 13bits {8bit refers to that Ks and *SBFD-aggregationfactor* for DL, 13bits refers to that startSymbolAndLength-SBFD for DL and startslotAndLength-SBFD for DL }

Ks 5bits

startSymbolAndLength-SBFD for DL 7bits,

startslotAndLength-SBFD for DL 6bits,

SBFD-Periodicity for DL 3bits

SBFD-aggregationfactor for DL 3bits

Frequency-domain resource assignment -SBFD for F 16 bits

Time-domain resource assignment for SBFD for F– 8 bit or 13bits {8bit represents Ks

and SBFD-aggregationfactor for F, 13bits represents startSymbolAndLength-SBFD for

F and for F}

Ks      5bits

startSymbolAndLength-SBFD for F   7bits,

startslotAndLength-SBFD      for F    6bits,

SBFD-Periodicity      for F    3bits

SBFD-aggregationfactor for F      3bits

In the above configuration information, the Frequency-domain resource assignment - SBFD parameter is used to determine a location and a corresponding bandwidth of the SBFD frequency-domain resource, that is, used as the frequency-domain resource configuration information. A start PRB and a number of PRBs may be determined based on the frequency-domain resource configuration information. For example, a calculation manner of the start PRB ($RB_{start}$) and the number of PRBs (N) can be referred to the above first part, and details are not repeated herein. A value of the Frequency-domain resource assignment - SBFD parameter is a calculated result of the RIV, so the start PRB ($RB_{start}$) and the number of PRBs (N) are obtained based on the value of the parameter.

For subcarrier spacing, when a subcarrier bandwidth is consistent with the UL BWP, the subcarrier spacing may not be configured. For a cyclic prefix length of OFDM, when a symbol of SBFD is consistent with a cyclic prefix of a normal DL/Flexible OFDM symbol, the cyclic prefix length may not be configured.

In the above configuration information, the *startSymbolAndLength-SBFD* parameter is used to determine a symbol location of a SBFD time-domain resource, that is, used as time-domain resource configuration information. A start symbol and a number of symbols may be determined based on the time-domain resource configuration information. For example, a calculation manner of the start symbol and the number of symbols can be referred to the above first part, and details are not repeated herein. A value of the *startSymbolAndLength-SBFD* parameter is a calculated result of SLIV, and therefore, the start symbol S and the number of symbols L are obtained based on the value of the *startSymbolAndLength-SBFD* parameter. Values of the start symbol S and the number of symbols L may also be constrained as shown in Table 2.

In the above configuration information, the *startslotAndLength-SBFD* parameter is used to determine a slot location of a SBFD time-domain resource, that is, used as time-domain resource configuration information. The start slot and the number of slots are determined based on the time-domain resource configuration information. For example, a calculation manner of the start slot and the number of slots in one period (one period may be P slots, and a value of P may be 5 or 10, etc.) can be referred to the above first part, and details are not repeated herein. A value of the *startslotAndLength-SBFD* parameter is a calculated result of SlotLIV, and therefore, the start slot N and the number of slots M may be obtained based on the value of the *startslotAndLength-SBFD* parameter. The values of the start slot N and the number of slots M may be constrained as shown in Table 3.

In an embodiment, for a dynamically configured SBFD time-frequency resource (that is, a changed SBFD time-frequency resource), the UE may directly activate the SBFD time-frequency resource without involving an activation and deactivation process. Alternatively, the activation and deactivation process may be involved, and the activation and deactivation process may be referred to the above first part.

In an embodiment, when the time-domain resource and the frequency-domain resource of the SBFD time-frequency resource are indicated by using a dynamic resource configuration message (for example, a DCI message), the time-domain resource and the frequency-domain resource indicated by the DCI message may be separately indicated, or may be indicated together. When the DCI message indicates the time-domain resource and the frequency-domain resource of the SBFD time-frequency resource separately, and when the DCI message indicates the time-domain resource, an unchanged frequency-domain resource is taken as default. When the DCI message indicates a frequency-domain resource, an unchanged time-domain resource is taken as default.

Fourth, the semi-static configuration is dynamically modified by a dynamic indication. For example, after the pattern list of the SBFD time-frequency resources is indicated by using the semi-static resource configuration message, and a group of resource configuration information is dynamically indicated (the first group of resource configuration information in the pattern list is asserted by using the DCI indication message), when the SBFD time-frequency resource changes, the semi-statically configured SBFD time-frequency resource is dynamically modified by using a dynamic indication.

In an embodiment, after the base station indicates the pattern list of the SBFD time-frequency resources by using the semi-static resource configuration message, when the SBFD time-frequency resource corresponding to the UE changes and the changed SBFD time-frequency resource corresponds to a second group of resource configuration information in the pattern list, the base station sends a dynamic resource configuration message to the UE, where the dynamic resource configuration message is used to enable the UE to assert the second group of resource configuration information in the pattern list.

The UE receives the dynamic resource configuration message sent by the base station, and asserts the second group of resource configuration information in the pattern list based on the dynamic resource configuration message, then determines an SBFD time-frequency resource corresponding to the second group of resource configuration information, and interacts uplink and downlink data with the base station based on the SBFD time-frequency resource.

In an embodiment, after the pattern list of the SBFD time-frequency resource is configured by using the RRC message (that is, the semi-static configuration message), when the SBFD time-frequency resource corresponding to the UE changes, the base station sends a dynamic resource configuration message to the UE, where the dynamic resource configuration message may be, for example, a DCI message or an RRC message.

The dynamic resource configuration message is used to enable the UE to assert a second group of resource configuration information in the pattern list (the second group of resource configuration information is any group of resource configuration information in all groups of resource configuration information in the pattern list, and the second group of resource configuration information corresponds to the changed SBFD time-frequency resource).

After receiving the dynamic resource configuration message sent by the base station, the UE may assert the second group of resource configuration information in the pattern list based on the dynamic resource configuration message, that is, the UE learns which set of resource configuration information to be used, and then determines the SBFD time-frequency resource based on the set of resource configuration information.

For example, since the group of resource configuration information includes frequency-domain resource configuration information and/or time-domain resource configuration information, the UE may determine a frequency-domain resource location of the SBFD time-frequency resource based on the frequency-domain resource configuration information, and determine a time-domain resource location of the SBFD time-frequency resource based on the time-domain resource configuration information.

In an embodiment, a length of a parameter (the parameter is used to indicate the second group of resource configuration information in the pattern list) carried in the dynamic resource configuration message may be determined based on a length of the pattern list.

In an embodiment, before sending the dynamic resource configuration message to the UE, the base station may further scramble the dynamic resource configuration message. After receiving the dynamic resource configuration message, the UE may further descramble the dynamic resource configuration message.

For example, the base station may scramble the dynamic resource configuration message by using a C-RNTI, and the UE descramble the dynamic resource configuration message by using the C-RNTI. The base station may scramble the dynamic resource configuration message by using a G-RNTI, and the UE descramble the dynamic resource configuration message by using the G-RNTI. The base station may scramble the dynamic resource configuration message by using a SBFD-RNTI, and the UE descramble the dynamic resource configuration message by using the SBFD-RNTI.

In an embodiment, after receiving the dynamic resource configuration message, the UE may assert the second group of resource configuration information in the pattern list based on the dynamic resource configuration message. For example, the second group of resource configuration information in the pattern list is asserted immediately after the dynamic resource configuration message is received. Alternatively, the UE may first determine an assertion time, and assert the second group of resource configuration information in the pattern list at the assertion time.

An assertion time of the second group of resource configuration information may be determined in a following manner.

Manner A: the UE determines an assertion time based on a next frame of a current frame carrying the dynamic resource configuration message, and asserts the second group of resource configuration information in the pattern list at the assertion time. For example, the UE determines a start moment of a next frame of the current frame that carries the dynamic resource configuration message as the assertion time.

For example, when the second group of resource configuration information includes time-domain resource configuration information, and the time-domain resource configuration information includes *startSymbolAndLength-SBFD* and *startslotAndLength-SBFD,* that is, the *startSymbolAndLength-SBFD* is used to determine a start symbol and a number of symbols of the SBFD time-frequency resource, and the *startslotAndLength-SBFD* is used to determine a start slot and a number of slots of the SBFD time-frequency resource, then a start moment of the next frame of the current frame carrying the dynamic resource configuration message may be used as the assertion time.

Manner B: the UE determines an assertion time based on a system frame number and a SBFD time-frequency resource period parameter, and asserts the second group of resource configuration information in the pattern list at the assertion time. For example, after receiving the dynamic resource configuration message, the UE determines a moment when the system frame number SFN mod periodicity = n as the assertion time.

The periodicity indicates the SBFD time-frequency resource periodicity parameter, and the SBFD time-frequency resource periodicity parameter may be located in the second group of resource configuration information, or may be carried in the dynamic resource configuration message. SFN mod periodicity = n indicates that a modulo operation result of a system frame number (SFN) on an SBFD time-frequency resource periodicity parameter is n, and for a system frame number satisfying the condition, a start moment of a system frame corresponding to the system frame number is used as the assertion time.

For example, when the second group of resource configuration information includes time-domain resource configuration information, and the time-domain resource configuration information includes *startSymbolAndLength-SBFD* and *startslotAndLength-SBFD,* the assertion time may be determined based on the system frame number and the SBFD time-frequency resource periodicity parameter.

Manner C: the UE determines an assertion time based on a system frame number, and asserts the second group of resource configuration information in the pattern list at the assertion time. For example, after receiving the dynamic resource configuration message, the UE determines a moment when the system frame number SFN = m as the assertion time. SFN = m indicates that the system frame number SFN is m, and for a system frame number satisfying the condition, a start moment of a system frame corresponding to the system frame number is used as the assertion time.

For example, when the second group of resource configuration information includes time-domain resource configuration information, and the time-domain resource configuration information includes *startSymbolAndLength-SBFD* and *startslotAndLength-SBFD,* the assertion time may be determined based on the system frame number, for example, a moment at which the system frame number SFN = m is used as the assertion time.

Manner D: the UE acquires an assertion interval duration, where the assertion interval duration may indicate an interval duration between a receiving moment of the dynamic resource configuration message and an assertion time, and the assertion time is used to indicate an assertion time of the second group of resource configuration information in the pattern list. The UE may determine the assertion time based on the assertion interval duration, and assert the second group of resource configuration information in the pattern list at the assertion time.

For example, when the base station sends the dynamic resource configuration message to the UE, the dynamic resource configuration message may include the assertion interval duration. Alternatively, the assertion interval duration is located in a second group of resource configuration information (pattern list), so that the UE may acquire the assertion interval duration from the second group of resource configuration information. Certainly, the UE may alternatively acquire the assertion interval duration in another manner, for example, the assertion interval duration may be a default value, which is not limited.

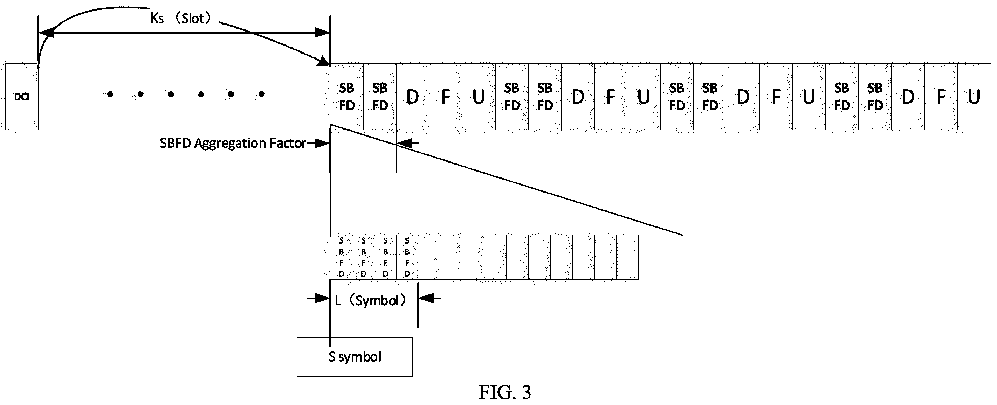

Referring to FIG. 3, FIG. 3 is a schematic scheduling diagram of configuring SBFD time-frequency resources with slots and periods through DCI (that is, the dynamic resource configuration message), Ks represents the assertion/implementation interval duration, and a unit of the assertion interval duration Ks may be a slot. After receiving the dynamic resource configuration message, the UE uses a sum of a slot corresponding to the receiving moment of the dynamic resource configuration message (that is, the slot after the receiving moment of the dynamic resource configuration message) and the assertion interval duration Ks as the assertion time. The SBFD-Periodicity indicates that there is only one group of SBFD time-frequency resource in this period. The *SBFD-aggregationfactor* is used to indicate a number of SBFD slots.

For example, when the second group of resource configuration information includes time-domain resource configuration information, and the time-domain resource configuration information includes *startSymbolAndLength-SBFD* and SBFD-aggregation factor (SBFD aggregation factor), the UE may acquire the assertion interval duration, and determine the assertion time based on the assertion interval duration.

In an embodiment, the UE may determine a location of the SBFD time-frequency resource based on the assertion interval duration Ks, the *SBFD-aggregationfactor,* and the *startSymbolAndLength-SBFD.* Alternatively, the UE may determine a location of the SBFD time-frequency resource based on *startSymbolAndLength-SBFD* and *startslotAndLength-SBFD.* The assertion interval duration Ks and the SBFD-aggregation factor are equivalent to *startslotAndLength-SBFD,* which are two parallel implementations for determining a location of an SBFD time-frequency resource.

Based on this, there are two configurations for Time-domain resource assignment for SBFD, and the two configurations are 8 bits or 13 bits respectively. 8bit refers to the assertion interval duration Ks, SBFD-aggregation factor and *startSymbolAndLength-SBFD,* 13bits refers to *startSymbolAndLength-SBFD* and *startslotAndLength-SBFD,* therefore, the above two kinds of parameters may not be configured simultaneously.

For example, when the location of the SBFD time-frequency resource is determined based on Ks, *SBFD-aggregationfactor,* and *startSymbolAndLength-SBFD,* the UE determines the assertion time based on Ks. From the assertion time, slots of the SBFD time-frequency resource are determined based on the *SBFD-aggregationfactor.* For slots of the SBFD time-frequency resource, a starting symbol and a number of symbols in the slot may be determined based on *startSymbolAndLength-SBFD.*

For example, when determining the location of the SBFD time-frequency resource based on *startSymbolAndLength-SBFD* and *startslotAndLength-SBFD,* the UE determines a slot (for example, a start slot and a number of slots) of the SBFD time-frequency resource based on *startslotAndLength-SBFD.* For slots of the SBFD time-frequency resource, a starting symbol and a number of symbols in the slot may be determined based on *startSymbolAndLength-SBFD*.

In an embodiment, after asserting the second group of resource configuration information in the pattern list, the UE may directly activate the SBFD time-frequency resource corresponding to the second group of resource configuration information, and does not involve an activation and deactivation process. Alternatively, the activation and deactivation process may be involved, and the activation and deactivation process may be referred to the above first part.

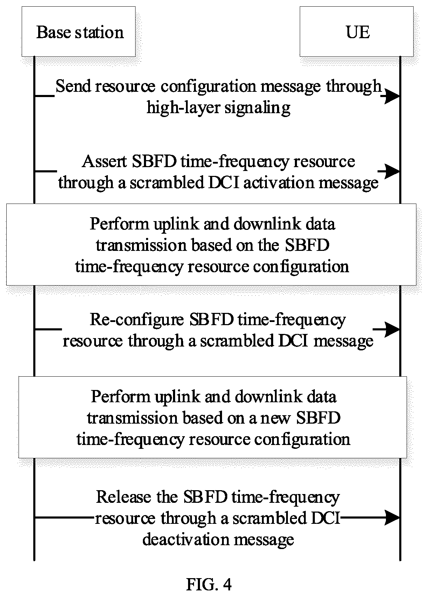

In an embodiment, a process of dynamically modifying semi-static configuration can be referred to FIG. 4, and the process may include: the base station sends a resource configuration message to the UE by using higher layer signaling (for example, a semi-static configuration message), where the resource configuration message includes configuration information of the SBFD time-frequency resource (refer to S11), or the resource configuration message includes a pattern list of the SBFD time-frequency resource, and the pattern list includes multiple groups of resource configuration information (refer to S21).

The base station selects a group of resource configuration information through a DCI indication message scrambled by the C-RNTI/G-RNTI/SBFD-RNTI, and enables the UE to assert the group of resource configuration information in the pattern list through the DCI indication message. The base station activates the SBFD time-frequency resource through the DCI activation message scrambled by C-RNTI/G-RNTI/SBFD-RNTI.

The base station and the UE perform transmission of uplink and downlink data (the uplink and downlink data may be service data, a reference signal, signaling, etc., where a form of the data is not limited) in the SBFD time-frequency resource configuration.

The base station reconfigures the SBFD time-frequency resource through the DCI message scrambled by the C-RNTI/G-RNTI/SBFD-RNTI (reselects a group of resource configuration information from the pattern list, which can be referred to the implementation of the fourth part, or reconfigures the SBFD time-frequency resource, which can be referred to the implementation of the third part).

The base station and the UE perform transmission of uplink and downlink data (the uplink and downlink data may be service data, a reference signal, signaling, etc. , where a form of the data is not limited) in a new SBFD time-frequency resource configuration.

The base station releases the SBFD time-frequency resource through the DCI deactivation message scrambled by the C-RNTI/G-RNTI/SBFD-RNTI, and the base station and the UE operate without configuration of the SBFD time-frequency resource.

Fifth, the SBFD time-frequency resource is dynamically indicated. For example, the SBFD time-frequency resource is indicated by using a dynamic resource configuration message, and the dynamic resource configuration message may be a DCI message, a MAC-CE message, or another type of message, and a type of the dynamic resource configuration message is not limited.

In an embodiment, the base station sends a resource configuration message to the UE, and the UE receives the resource configuration message sent by the base station, and determines a SBFD time-frequency resource based on the resource configuration message. The resource configuration message may be a dynamic resource configuration message, and the dynamic resource configuration message includes configuration information of the SBFD time-frequency resource.

For example, the dynamic resource configuration message may include frequency-domain resource configuration information and/or time-domain resource configuration information. The frequency-domain resource configuration information is used to determine a frequency-domain resource location of the SBFD time-frequency resource, and the time-domain resource configuration information is used to determine a time-domain resource location of the SBFD time-frequency resource.

For example, the frequency-domain resource location may include a start PRB and a number of PRBs of the SBFD time-frequency resource. The time-domain resource location may include a start symbol and a number of symbols in a slot of the SBFD time-frequency resource.

In addition to the start symbol and the number of symbols, the time-domain resource location may further include a start slot and a number of slots of the SBFD time-frequency resource. Alternatively, the time-domain resource location may further include an SBFD aggregation factor of the SBFD time-frequency resource. The SBFD aggregation factor is used to indicate a number of downlink resources occupied by the SBFD time-frequency resource, or the SBFD aggregation factor is used to indicate a number of flexible resources occupied by the SBFD time-frequency resource, or the SBFD aggregation factor is used to indicate a number of downlink resources and a number of flexible resources occupied by the SBFD time-frequency resource.

In an embodiment, a manner of dynamically indicating the SBFD time-frequency resource may adopt a one-shot SBFD time-frequency resource dynamic assignment manner, that is, the SBFD time-frequency resource is assigned in one time for uplink and downlink data (such as service data, signaling, and a reference signal) transmission, and an IE of a DCI message/MAC-CE message is designed.

For a DL slot and a flexible slot, when the SBFD time-frequency resource is assigned in one time by using a DCI message (that is, a dynamic resource configuration message), an IE of the DCI message may be as follows:

Frequency-domain resource assignment -SBFD for DL 16 bits

Time-domain resource assignment for SBFD for DL– 8 bit or 13bits {8bit refers to that Ks and SBFD-aggregationfactor for DL, 13bits refers to that startSymbolAndLength-SBFD for DL and startslotAndLength-SBFD for DL}

Ks                                   5bits

startSymbolAndLength-SBFD for DL        7bits,

startslotAndLength-SBFD for DL        6bits,

SBFD-aggregationfactor for DL  3bits

Frequency-domain resource assignment -SBFD for F    16 bits

Time-domain resource assignment for SBFD for F– 8 bit or 13bits {8bit represents Ks and SBFD-aggregationfactor for F, 13bits represents startSymbolAndLength-SBFD for F and startslotAndLength-SBFD for F}

Ks                                   5bits

startSymbolAndLength-SBFD for F   7bits,

startslotAndLength-SBFD for F    6bits,

SBFD-aggregationfactor for F    3bits

In the above configuration information, the Frequency-domain resource assignment - SBFD parameter is used to determine a location and a corresponding bandwidth of the SBFD frequency-domain resource, that is, used as the frequency-domain resource configuration information. A start PRB and a number of PRBs may be determined based on the frequency-domain resource configuration information. For example, a calculation manner of the start PRB ($RB_{start}$) and the number of PRBs (N) can be referred to the above first part, and details are not repeated herein. A value of the Frequency-domain resource assignment - SBFD parameter is a calculated result of the RIV, so the start PRB ($RB_{start}$) and the number of PRBs (N) are obtained based on the value of the parameter.

For subcarrier spacing, when a subcarrier bandwidth is consistent with the UL BWP, the subcarrier spacing may not be configured. For a cyclic prefix length of OFDM, when a symbol of SBFD is consistent with a cyclic prefix of a normal DL/Flexible OFDM symbol, the cyclic prefix length may not be configured.

In the above configuration information, the *startSymbolAndLength-SBFD* parameter is used to determine a symbol location of a SBFD time-domain resource, that is, used as time-domain resource configuration information. A start symbol and a number of symbols may be determined based on the time-domain resource configuration information. For example, a calculation manner of the start symbol and the number of symbols can be referred to the above first part, and details are not repeated herein. A value of the *startSymbolAndLength-SBFD* parameter is a calculated result of SLIV, and therefore, the start symbol S and the number of symbols L are obtained based on the value of the *startSymbolAndLength-SBFD* parameter. Values of the start symbol S and the number of symbols L may also be constrained as shown in Table 2.

In the above configuration information, the *startslotAndLength-SBFD* parameter is used to determine a slot location of a SBFD time-domain resource, that is, used as time-domain resource configuration information. The start slot and the number of slots are determined based on the time-domain resource configuration information. For example, a calculation manner of the start slot and the number of slots in one period (one period may be P slots, and a value of P may be 5 or 10, etc.) can be referred to the above first part, and details are not repeated herein. A value of the *startslotAndLength-SBFD* parameter is a calculated result of SlotLIV, and therefore, the start slot N and the number of slots M may be obtained based on the value of the *startslotAndLength-SBFD* parameter. The values of the start slot N and the number of slots M may be constrained as shown in Table 3.

In an embodiment, for a dynamically configured SBFD time-frequency resource, the UE may directly activate the SBFD time-frequency resource without involving activation and deactivation processes. Alternatively, an activation and deactivation process may also be involved, and for the activation and deactivation process, reference may be made to the first part, which will not be repeated herein.

In an embodiment, after determining the SBFD time-frequency resource based on the dynamic resource configuration message, the UE may determine an assertion time based on a next frame of a current frame carrying the dynamic resource configuration message, and assert the SBFD time-frequency resource at the assertion time. Alternatively, the assertion time is determined based on a system frame number and a SBFD time-frequency resource periodicity parameter, and the SBFD time-frequency resource is asserted at the assertion time. Alternatively, the assertion time is determined based on a system frame number, and the SBFD time-frequency resource is asserted at the assertion time. Alternatively, an assertion interval duration is acquired, where the assertion interval duration indicates an interval duration between a receiving moment of the dynamic resource configuration message and an assertion time, and the assertion time is determined based on the assertion interval duration, and the SBFD time-frequency resource is asserted at the assertion time.

Six, the SBFD time-frequency resource is dynamically indicated. For example, a pattern list of SBFD time-frequency resources is indicated by using a dynamic resource configuration message, and the dynamic resource configuration message may be a DCI message, a MAC-CE message, or another type of message, which is not limited.

In an embodiment, the base station sends a resource configuration message to the UE, and the UE receives the resource configuration message sent by the base station. The resource configuration message may be a dynamic resource configuration message, the dynamic resource configuration message includes a pattern list of the SBFD time-frequency resource, the pattern list may include a plurality of groups of resource configuration information, and each group of resource configuration information includes frequency-domain resource configuration information and/or time-domain resource configuration information.

The frequency-domain resource configuration information is used to determine a frequency-domain resource location of the SBFD time-frequency resource, and the time-domain resource configuration information is used to determine a time-domain resource location of the SBFD time-frequency resource.

For example, the frequency-domain resource location may include a start PRB and a number of PRBs of the SBFD time-frequency resource. The time-domain resource location may include a start symbol and a number of symbols in a slot of the SBFD time-frequency resource. In addition to the start symbol and the number of symbols, the time-domain resource location may further include a start slot and a number of slots of the SBFD time-frequency resource. Alternatively, the time-domain resource location may further include an SBFD aggregation factor of the SBFD time-frequency resource.

In an embodiment, after sending the resource configuration message to the UE, the base station may further send a DCI indication message or a MAC-CE indication message (or may be replaced with another type of dynamic message) to the UE, where the DCI indication message or the MAC-CE indication message is used to enable the UE to assert a group of resource configuration information in the pattern list.

The UE receives the DCI indication message or the MAC-CE indication message sent by the base station, asserts a group of resource configuration information in the pattern list based on the DCI indication message or the MAC-CE indication message, determines a SBFD time-frequency resource corresponding to the group of resource configuration information, and interacts uplink and downlink data with the base station based on the SBFD time-frequency resource.

For example, since the group of resource configuration information includes frequency-domain resource configuration information and/or time-domain resource configuration information, the UE may determine a frequency-domain resource location of the SBFD time-frequency resource based on the frequency-domain resource configuration information, and determine a time-domain resource location of the SBFD time-frequency resource based on the time-domain resource configuration information.

In an embodiment, DCI indication message is taken as an example, a length of a parameter (the parameter is used to indicate resource configuration information in a pattern list) carried in the DCI indication message may be determined based on a length of the pattern list.

In an embodiment, before sending the DCI indication message to the UE, the base station may further scramble the DCI indication message. After receiving the DCI indication message, the UE may further descramble the DCI indication message.

For example, the base station may scramble the DCI indication message by using a C-RNTI, and the UE may descramble the DCI indication message by using the C-RNTI. The base station may scramble the DCI indication message by using a G-RNTI, and the UE may descramble the DCI indication message by using the G-RNTI. The base station may scramble the DCI indication message by using a SBFD-RNTI, and the UE may descramble the DCI indication message by using the SBFD-RNTI.

In an embodiment, after receiving the DCI indication message, the UE may assert a group of resource configuration information in the pattern list based on the DCI indication message. For example, after receiving the DCI indication message, the UE immediately asserts a group of resource configuration information in the pattern list. Alternatively, the UE may first determine an assertion time, and assert a group of resource configuration information in the pattern list at the assertion time.

An assertion time of the group of resource configuration information may be determined in a following manner.

Manner A: the UE determines an assertion time based on a next frame of a current frame carrying the DCI indication message, and asserts a group of resource configuration information in the pattern list at the assertion time. For example, the UE determines a start moment of a next frame of the current frame carrying the DCI indication message as the assertion time.

Manner B: the UE determines an assertion time based on a system frame number and a SBFD time-frequency resource period parameter, and asserts a group of resource configuration information in the pattern list at the assertion time. For example, after receiving the DCI indication message, the UE determines a moment when the system frame number SFN mod periodicity = n as the assertion time.

The periodicity indicates the SBFD time-frequency resource periodicity parameter, and the SBFD time-frequency resource periodicity parameter may be located in the resource configuration information, or may be carried in the DCI indication message. SFN mod periodicity = n indicates that a modulo operation result of a system frame number (SFN) on an SBFD time-frequency resource periodicity parameter is n, and for a system frame number satisfying the condition, a start moment of a system frame corresponding to the system frame number is used as the assertion time.

Manner C: the UE determines an assertion time based on a system frame number, and asserts a group of resource configuration information in the pattern list at the assertion time. For example, after receiving the DCI indication message, the UE determines a moment when the system frame number SFN = m as the assertion time. SFN = m indicates that the system frame number SFN is m, and for a system frame number satisfying the condition, a start moment of a system frame corresponding to the system frame number is used as the assertion time.

Manner D: the UE acquires an assertion interval duration, where the assertion interval duration may indicate an interval duration between a receiving moment of the DCI indication message and an assertion time, and the assertion time is used to indicate an assertion time of a group of resource configuration information in the pattern list. The UE may determine the assertion time based on the assertion interval duration, and assert a group of resource configuration information in the pattern list at the assertion time.

For example, when the base station sends the DCI indication message to the UE, the DCI indication message may include the assertion interval duration, and therefore, the UE may acquire the assertion interval duration in the DCI indication message. Alternatively, the assertion interval duration is located in the resource configuration information (pattern list), so that the UE may acquire the assertion interval duration from the resource configuration information. Certainly, the assertion interval duration may alternatively be a default value or the like.

In an embodiment, a unit of the assertion interval duration Ks may be a slot. After receiving the DCI indication message, the UE determines a sum of a slot corresponding to the receiving moment of the DCI indication message (that is, a slot after the receiving moment of the DCI indication message) and the assertion interval duration Ks as the assertion time.

In an embodiment, SBFD-Periodicity indicates that there is only one group of SBFD time-frequency resources in this period. The *SBFD-aggregationfactor* is used to indicate a number of SBFD slots.

In an embodiment, the UE may determine a location of the SBFD time-frequency resource based on the assertion interval duration Ks, the *SBFD-aggregationfactor,* and the *startSymbolAndLength-SBFD.* Alternatively, the UE may determine a location of the SBFD time-frequency resource based on *startSymbolAndLength-SBFD* and *startslotAndLength-SBFD.* The assertion interval duration Ks and the SBFD-aggregation factor are equivalent to *startslotAndLength-SBFD,* which are two parallel implementations for determining a location of an SBFD time-frequency resource.

Based on this, there are two configurations for Time-domain resource assignment for SBFD, and the two configurations are 8 bits or 13 bits respectively. 8 bit refers to the assertion interval duration Ks, SBFD-aggregation factor and *startSymbolAndLength-SBFD,* 13 bits refers to *startSymbolAndLength-SBFD* and *startslotAndLength-SBFD,* therefore, the above two kinds of parameters may not be configured simultaneously.

For example, when the location of the SBFD time-frequency resource is determined based on Ks, *SBFD-aggregationfactor,* and *startSymbolAndLength-SBFD,* the UE determines the assertion time based on Ks. From the assertion time, slots of the SBFD time-frequency resource are determined based on the *SBFD-aggregationfactor.* For slots of the SBFD time-frequency resource, a starting symbol and a number of symbols in the slot may be determined based on *startSymbolAndLength-SBFD.*

For example, when determining the location of the SBFD time-frequency resource based on *startSymbolAndLength-SBFD* and *startslotAndLength-SBFD,* the UE determines a slot (for example, a start slot and a number of slots) of the SBFD time-frequency resource based on *startslotAndLength-SBFD.* For slots of the SBFD time-frequency resource, a starting symbol and a number of symbols in the slot may be determined based on *startSymbolAndLength-SBFD.*

In an embodiment, the DCI indication message may be used together with uplink and downlink data scheduling DCI, or the DCI indication message may be separately configured, and an implementation manner of the DCI indication message is not limited.

In an embodiment, after asserting a group of resource configuration information in the pattern list, the UE may directly activate the SBFD time-frequency resource corresponding to the group of resource configuration information, and does not involve an activation and deactivation process. Alternatively, the activation and deactivation process may be involved, and the activation and deactivation process may be referred to the above first part.

In an embodiment, the base station may assert a group of resource configuration information in the pattern list by using a DCI message, or may assert a group of resource configuration information in the pattern list by using a MAC-CE message. When the resource configuration information is asserted by using the MAC-CE message, the resource configuration information may be asserted by using a related logical channel of a LTL-SCH (Uplink-Shared Channel), and an IE indicating the SBFD time-frequency resource by using the MAC-CE message is shown in Table 11.

Table 11

| Codepoint | Index | LCID values |
|---|---|---|
| 0 to 227 | 64 to 291 | Reserved |
| 228 | 292 | SBFD time-frequency resource assignment<br>The bitwidth for this field is determined as bits, where I is the number of entries in the higher layer parameter SBFD-ConfigInfoList; |
| 229 | 293 | Enhanced Multiple Entry PHR for multiple TRP (four octets Ci) |
| 230 | 294 | Enhanced Multiple Entry PHR for multiple TRP (one octets Ci) |
| 231 | 295 | Enhanced Single Entry PHR for multiple TRP |

For IE design indicating a group of configurations through a DCI message, reference may be made to the above embodiments, provided that the base station sends the pattern list of the SBFD time-frequency resource to the UE through an RRC message.

Seventh, the SBFD time-frequency resource is dynamically indicated. For example, the SBFD time-frequency resource may be indicated by using a semi-persistent resource configuration message, and the semi-persistent resource configuration message may be a DCI message, a MAC-CE message, or another type of message, which is not limited.

In an embodiment, the base station sends a resource configuration message to the UE, and the UE receives the resource configuration message sent by the base station, and determines a SBFD time-frequency resource based on the resource configuration message. The resource configuration message may be a semi-persistent resource configuration message, and the semi-persistent resource configuration message includes configuration information of the SBFD time-frequency resource.

For example, the semi-persistent resource configuration message may include frequency-domain resource configuration information and/or time-domain resource configuration information. The frequency-domain resource configuration information is used to determine a frequency-domain resource location of the SBFD time-frequency resource, and the time-domain resource configuration information is used to determine a time-domain resource location of the SBFD time-frequency resource.

The frequency-domain resource location may include a start PRB and a number of PRBs of the SBFD time-frequency resource. The time-domain resource location may include a start symbol and a number of symbols in a slot of the SBFD time-frequency resource. In addition to the start symbol and the number of symbols, the time-domain resource location may further include a start slot and a number of slots of the SBFD time-frequency resource. Alternatively, the time-domain resource location may further include an SBFD aggregation factor of the SBFD time-frequency resource.

In an embodiment, a manner of dynamically indicating the SBFD time-frequency resource may include a SBFD time-frequency resource dynamic manner + an assertion period and a start point, for example, the SBFD time-frequency resource is assigned semi-persistently, and the SBFD time-frequency resource assigned semi-persistently has an assertion/implementation period, and within the assertion period, the base station and the UE may perform uplink and downlink data (for example, service data, signaling, and a reference signal) transmission by using the SBFD time-frequency resource.

For example, the semi-persistent resource configuration message may further include an SBFD association period parameter (denoted as an SBFD association period), and the semi-persistent resource configuration message is used to enable the UE to determine a duration of the SBFD time-frequency resource based on the SBFD association period parameter. After receiving the semi-persistent resource configuration message, the UE may determine the duration of the SBFD time-frequency resource based on the SBFD association period parameter.

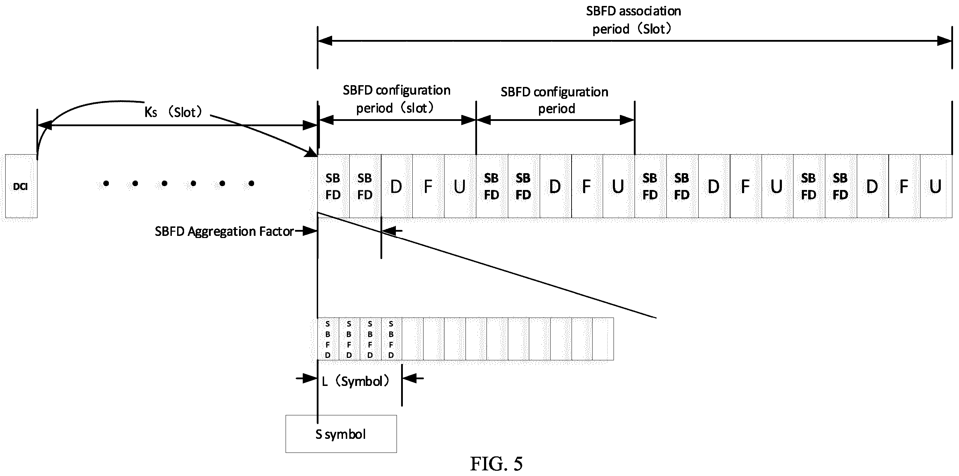

For example, for a one-time semi-persistent SBFD time-frequency resource assignment manner, an IE design of the semi-persistent resource configuration message (for example, a DCI message) is similar to the IE design of the dynamically modified semi-persistent configured DCI message, but an SBFD association period parameter is added, and the parameter is used to indicate a duration of an SBFD time-frequency resource. The parameter is greater than or equal to the SBFD period parameter, as shown in FIG. 5, which is a schematic diagram of an SBFD time-frequency resource dynamic manner + an assertion period and a start point.

The added SBFD association period in the DCI message may be as follows:
SBFD association period, ENUMERATED {ms5, ms10, ms20, ms40, ms80, ms160,ms32}

In an embodiment, when sending a semi-persistent resource configuration message (for example, a DCI message) to the UE, the base station may further scramble the semi-persistent resource configuration message by using a C-RNTI/G-CS-RNTI/SBFD-CS-RNTI.

Eighth, fallback mechanism of SBFD configuration.

The fallback mechanism of SBFD configuration refers to that the base station and the UE fall back from the SBFD configuration to a TDD system configuration without SBFD time-frequency resources (Legacy TDD configuration). The fallback mechanism is implemented in two manners: 1 bit is used to indicate whether a cell configuration falls back to the TDD system configuration, and a DCI/MAC-CE/RRC message is used to indicate a group of configurations (no SBFD resource configuration) in the pattern list of the SBFD configuration.

1. Using 1 bit to indicate whether a cell configuration falls back to the TDD system configuration.

For example, DCI format 4_0, DCI format 4_1, or a new DCI may be used to carry a 1-bit fallback indication through C-RNTI/G-RNTI/SBFD-RNTI scrambling. When the IE is set to 1, it indicates to fall back to the TDD system configuration. Certainly, the IE may also be carried by using higher layer signaling or a MAC-CE, which is not limited.

Table 12

| IE | Value |
| --- | --- |
| SBFD resource activation/release | set to 1 for fallback to legacy TDD configuration |

2. Using a DCI/MAC-CE/RRC message to indicate a group of configurations in the pattern list of the SBFD configuration

For example, DCI format 4_0, DCI format 4_1, or a new DCI may be used to carry an IE through C-RNTI/G-RNTI/SBFD-RNTI scrambling, to indicate a group of configurations (no SBFD resource configuration) of a pattern list of SBFD configuration. A parameter length of the IE is determined according to a length of the pattern list.

To implement this function, the base station sets a group of parameter values that SBFD time-frequency resources are all 0 in the pattern list, and when the base station indicates the group of parameters by using DCI, it indicates that the base station and the UE need to fall back to the TDD system configuration to operate. The IE may also be carried by using higher layer signaling or a MAC-CE.

Ninth, for the SBFD time-frequency resource assigned by the base station to the UE, the SBFD configuration and the SFI configuration may have an interdependency relationship. For example, the base station acquires an SFI configuration assigned to the UE. Based on a slot format indicated by the SFI configuration, the base station allocates an SBFD time-frequency resource to the UE, and the SBFD time-frequency resource occupies a downlink slot and/or a flexible slot in the slot format (that is, the slot format indicated by the SFI configuration).

For the SBFD time-frequency resource assigned by the base station to the UE, the SBFD configuration and the SFI configuration may have no interdependency relationship, and the SBFD configuration and the SFI configuration need to be separately performed. For example, the base station allocates an SBFD time-frequency resource not associated with the SFI configuration to the UE, and the SBFD time-frequency resource occupies a downlink slot and/or a flexible slot. That is, the downlink slot and/or the flexible slot occupied by the SBFD time-frequency resource are unrelated to the SFI configuration.

It can be seen from the above technical solution that the proposed method for dynamically indicating SBFD time-frequency resources in TDD mode is a TDD full-duplex dynamic resource indication method. Under a condition that the 5G system is not influenced, under the SBFD configuration, a problem of uplink and downlink service congestion in a serving cell can be solved, the transmission latency is reduced, the user experience is improved, the requirements of high-reliability and low-latency services are met, uplink transmission resources and cell coverage are increased, the transmission latency is reduced, and the uplink transmission reliability is improved.

Based on a same inventive concept, a data transmission apparatus corresponding to the above data transmission method, and a base station and a UE are further provided.

Based on a same application concept as the above method, an embodiment of the present disclosure provides a data transmission apparatus, applied to a base station, where the apparatus includes: a sending module, configured to send a resource configuration message to a user equipment, where the resource configuration message is used to indicate a sub-band full-duplex (SBFD) time-frequency resource assigned to the user equipment; and
a transmitting module, configured to interact uplink and downlink data with the user equipment based on the SBFD time-frequency resource.

In an embodiment, the resource configuration message is a semi-static resource configuration message, and the resource configuration message includes at least one of frequency-domain resource configuration information or time-domain resource configuration information; and the frequency-domain resource configuration information is used to determine a frequency-domain resource location of the SBFD time-frequency resource, and the time-domain resource configuration information is used to determine a time-domain resource location of the SBFD time-frequency resource; the sending module is further configured to send a downlink control information (DCI) activation message to the user equipment, where the DCI activation message is used to enable the user equipment to activate the SBFD time-frequency resource.

In an embodiment, the resource configuration message is a semi-static resource configuration message, the resource configuration message includes a pattern list of the SBFD time-frequency resource, the pattern list includes a plurality of groups of resource configuration information, and each group of resource configuration information includes frequency-domain resource configuration information and/or time-domain resource configuration information;

the frequency-domain resource configuration information is used to determine a frequency-domain resource location of the SBFD time-frequency resource, and the time-domain resource configuration information is used to determine a time-domain resource location of the SBFD time-frequency resource;
the sending module is further configured to send a DCI indication message to the user equipment, where the DCI indication message is used to enable the user equipment to assert a first group of resource configuration information in the pattern list; and
the sending module is further configured to send a DCI activation message to the user equipment, where the DCI activation message is used to enable the user equipment to activate the SBFD time-frequency resource corresponding to the first group of resource configuration information.

In an embodiment, the frequency-domain resource location includes a start PRB and a number of PRBs of the SBFD time-frequency resource;

the time-domain resource location includes a start symbol and a number of symbols in a slot of the SBFD time-frequency resource;
the time-domain resource location further includes a start slot and a number of slots of the SBFD time-frequency resource; or the time-domain resource location further includes an SBFD aggregation factor of the SBFD time-frequency resource;
where the SBFD aggregation factor is used to indicate a number of downlink resources occupied by the SBFD time-frequency resource, or the SBFD aggregation factor is used to indicate a number of flexible resources occupied by the SBFD time-frequency resource, or the SBFD aggregation factor is used to indicate a number of downlink resources and a number of flexible resources occupied by the SBFD time-frequency resource.

In an embodiment, the sending module is further configured to send a DCI deactivation message to the user equipment, where the DCI deactivation message is used to enable the user equipment to deactivate the SBFD time-frequency resource.

In an embodiment, the DCI activation message or the DCI deactivation message is a first-type DCI message, the first-type DCI message includes a specified field, the specified field is a first specified identifier or a second specified identifier, the first specified identifier is used to enable the user equipment to activate the SBFD time-frequency resource, and the second specified identifier is used to enable the user equipment to deactivate the SBFD time-frequency resource; or

the DCI activation message or the DCI deactivation message is a first-type DCI message, the first-type DCI message includes a reserved bit, the reserved bit takes a first value or a second value, the first value is used to enable the user equipment to activate the SBFD time-frequency resource, and the second value is used to enable the user equipment to deactivate the SBFD time-frequency resource; or
the DCI activation message or the DCI deactivation message is a second-type DCI message, the second-type DCI message includes a resource field used to indicate to activate or deactivate the SBFD time-frequency resource, the resource field takes a third value or a fourth value, the third value is used to enable the user equipment to activate the SBFD time-frequency resource, and the fourth value is used to enable the user equipment to deactivate the SBFD time-frequency resource.

In an embodiment, the apparatus further includes: a scrambling module, configured to scramble the DCI activation message or the DCI deactivation message by using a C-RNTI, where the C-RNTI is an RNTI for the user equipment, and C-RNTIs of different user equipments are different; or

scramble the DCI activation message or the DCI deactivation message by using a group-radio network temporary identifier (G-RNTI), where the G-RNTI is an RNTI for a cluster group to which the user equipment belongs, and G-RNTIs of different cluster groups are different; or

scramble the DCI activation message or the DCI deactivation message by using an SBFD-RNTI, where the SBFD-RNTI is an RNTI for the SBFD time-frequency resource.

In an embodiment, the sending module is further configured to send a scrambling message to the user equipment, where the scrambling message includes the SBFD-RNTI.

In an embodiment, the DCI indication message includes an assertion interval duration, the assertion interval duration indicates an interval duration between a receiving moment of the DCI indication message and an assertion time, and the assertion time indicates an assertion time of a first group of resource configuration information in the pattern list.

In an embodiment, the sending module is further configured to send a dynamic resource configuration message to the user equipment, where the dynamic resource configuration message is used to indicate a changed SBFD time-frequency resource assigned to the user equipment.

In an embodiment, the sending module is further configured to, when the SBFD time-frequency resource corresponding to the user equipment changes and a changed SBFD time-frequency resource corresponds to a second group of resource configuration information in the pattern list, send a dynamic resource configuration message to the user equipment , where the dynamic resource configuration message is used to enable the user equipment to assert the second group of resource configuration information in the pattern list.

In an embodiment, the resource configuration message is a dynamic resource configuration message, and the resource configuration message includes at least one of frequency-domain resource configuration information or time-domain resource configuration information; and the frequency-domain resource configuration information is used to determine a frequency-domain resource location of the SBFD time-frequency resource, and the time-domain resource configuration information is used to determine a time-domain resource location of the SBFD time-frequency resource.

In an embodiment, the resource configuration message is a dynamic resource configuration message, the resource configuration message includes a pattern list of the SBFD time-frequency resource, the pattern list includes a plurality of groups of resource configuration information, and each group of resource configuration information includes frequency-domain resource configuration information and/or time-domain resource configuration information;

the frequency-domain resource configuration information is used to determine a frequency-domain resource location of the SBFD time-frequency resource, and the time-domain resource configuration information is used to determine a time-domain resource location of the SBFD time-frequency resource;

the sending module is further configured to send a DCI indication message or a media access control-control element (MAC-CE) indication message to the user equipment, where the DCI indication message or the MAC-CE indication message is used to enable the user equipment to assert a group of resource configuration information in the pattern list.

In an embodiment, the resource configuration message is a semi-persistent resource configuration message, and the resource configuration message includes at least one of frequency-domain resource configuration information or time-domain resource configuration information; and the frequency-domain resource configuration information is used to determine a frequency-domain resource location of the SBFD time-frequency resource, and the time-domain resource configuration information is used to determine a time-domain resource location of the SBFD time-frequency resource;

the resource configuration message includes an SBFD association period parameter, and the resource configuration message is used to enable the user equipment to determine a duration of the SBFD time-frequency resource based on the SBFD association period parameter.

In an embodiment, the apparatus further includes: a processing module, configured to acquire a slot format indication (SFI) configuration assigned to the user equipment; assign the SBFD time-frequency resource to the user equipment based on a slot format indicated by the SFI configuration, where the SBFD time-frequency resource occupies a downlink slot and/or a flexible slot in the slot structure; or assign the SBFD time-frequency resource not associated with the SFI configuration to the user equipment, where the SBFD time-frequency resource occupies a downlink slot and/or a flexible slot.

Based on a same application concept as the above method, an embodiment of the present disclosure provides a data transmission apparatus, applied to a user equipment, where the apparatus includes: a receiving module, configured to receive a resource configuration message sent by a base station, where the resource configuration message is used to indicate a sub-band full-duplex (SBFD) time-frequency resource assigned to the user equipment; and a transmitting module, configured to interact uplink and downlink data with the base station based on the SBFD time-frequency resource.

In an embodiment, the resource configuration message is a semi-static resource configuration message, and the resource configuration message includes at least one of frequency-domain resource configuration information or time-domain resource configuration information; and the frequency-domain resource configuration information is used to determine a frequency-domain resource location of the SBFD time-frequency resource, and the time-domain resource configuration information is used to determine a time-domain resource location of the SBFD time-frequency resource; the receiving module is further configured to receive a DCI activation message sent by the base station, and activate the SBFD time-frequency resource based on the DCI activation message.

In an embodiment, the resource configuration message is a semi-static resource configuration message, the resource configuration message includes a pattern list of the SBFD time-frequency resource, the pattern list includes a plurality of groups of resource configuration information, and each group of resource configuration information includes frequency-domain resource configuration information and/or time-domain resource configuration information;

the frequency-domain resource configuration information is used to determine a frequency-domain resource location of the SBFD time-frequency resource, and the time-domain resource configuration information is used to determine a time-domain resource location of the SBFD time-frequency resource;
the receiving module is further configured to receive a DCI indication message sent by the base station, and assert a first group of resource configuration information in the pattern list based on the DCI indication message;
the receiving module is further configured to receive a DCI activation message sent by the base station, and activate the SBFD time-frequency resource corresponding to the first group of resource configuration information based on the DCI activation message.

In an embodiment, the frequency-domain resource location includes a start PRB and a number of PRBs of the SBFD time-frequency resource; the time-domain resource location includes a start symbol and a number of symbols in a slot of the SBFD time-frequency resource; and the time-domain resource location further includes a start slot and a number of slots of the SBFD time-frequency resource; or the time-domain resource location further includes an SBFD aggregation factor of the SBFD time-frequency resource; where the SBFD aggregation factor is used to indicate a number of downlink resources occupied by the SBFD time-frequency resource, or the SBFD aggregation factor is used to indicate a number of flexible resources occupied by the SBFD time-frequency resource, or the SBFD aggregation factor is used to indicate a number of downlink resources and a number of flexible resources occupied by the SBFD time-frequency resource.

In an embodiment, the receiving module is further configured to receive a DCI deactivation message sent by the base station, and deactivate the SBFD time-frequency resource based on the DCI deactivation message.

In an embodiment, the DCI activation message or the DCI deactivation message is a first-type DCI message, the first-type DCI message includes a specified field, the specified field is a first specified identifier or a second specified identifier, the first specified identifier is used to enable the user equipment to activate the SBFD time-frequency resource, and the second specified identifier is used to enable the user equipment to deactivate the SBFD time-frequency resource; or

the DCI activation message or the DCI deactivation message is a first-type DCI message, the first-type DCI message includes a reserved bit, the reserved bit takes a first value or a second value, the first value is used to enable the user equipment to activate the SBFD time-frequency resource, and the second value is used to enable the user equipment to deactivate the SBFD time-frequency resource; or
the DCI activation message or the DCI deactivation message is a second-type DCI message, the second-type DCI message includes a resource field used to indicate to activate or deactivate the SBFD time-frequency resource, the resource field takes a third value or a fourth value, the third value is used to enable the user equipment to activate the SBFD time-frequency resource, and the fourth value is used to enable the user equipment to deactivate the SBFD time-frequency resource.

In an embodiment, the apparatus further includes: a descrambling module, configured to descramble the DCI activation message or the DCI deactivation message by using a C-RNTI, where the C-RNTI is an RNTI for the user equipment, and C-RNTIs of different user equipments are different; or descramble the DCI activation message or the DCI deactivation message by using a G-RNTI, where the G-RNTI is an RNTI for a cluster group to which the user equipment belongs, and G-RNTIs of different cluster groups are different; or descramble the DCI activation message or the DCI deactivation message by using an SBFD-RNTI, where the SBFD-RNTI is an RNTI for the SBFD time-frequency resource.

In an embodiment, the receiving module is further configured to receive a scrambling message sent by the base station, where the scrambling message includes the SBFD-RNTI.

In an embodiment, when asserting the first group of resource configuration information in the pattern list based on the DCI indication message, the receiving module is specifically configured to: determine an assertion time based on a next frame of a current frame carrying the DCI indication message, and assert the first group of resource configuration information in the pattern list at the assertion time; or determine an assertion time based on a system frame number and an SBFD time-frequency resource period parameter, and assert the first group of resource configuration information in the pattern list at the assertion time; or determine an assertion time based on a system frame number, and assert the first group of resource configuration information in the pattern list at the assertion time; or acquire an assertion interval duration, where the assertion interval duration indicates an interval duration between a receiving moment of the DCI indication message and the assertion time, determine an assertion time based on the assertion interval duration, and assert the first group of resource configuration information in the pattern list at the assertion time.

In an embodiment, the receiving module is further configured to receive a dynamic resource configuration message sent by the base station; and determine a changed SBFD time-frequency resource based on the dynamic resource configuration message.

In an embodiment, the receiving module is further configured to receive a dynamic resource configuration message sent by the base station; and assert a second group of resource configuration information in the pattern list based on the dynamic resource configuration message.

In an embodiment, the resource configuration message is a dynamic resource configuration message, and the resource configuration message includes at least one of frequency-domain resource configuration information or time-domain resource configuration information; and the frequency-domain resource configuration information is used to determine a frequency-domain resource location of the SBFD time-frequency resource, and the time-domain resource configuration information is used to determine a time-domain resource location of the SBFD time-frequency resource.

In an embodiment, the apparatus further includes: a processing module, configured to determine an assertion time based on a next frame of a current frame carrying the dynamic resource configuration message, and assert the SBFD time-frequency resource at the assertion time; or determine an assertion time based on a system frame number and an SBFD time-frequency resource period parameter, and assert the SBFD time-frequency resource at the assertion time; or determine an assertion time based on a system frame number, and assert the SBFD time-frequency resource at the assertion time; or acquire an assertion interval duration, where the assertion interval duration indicates an interval duration between a receiving moment of the dynamic resource configuration message and the assertion time, determine an assertion time based on the assertion interval duration, and assert the SBFD time-frequency resource at the assertion time.

In an embodiment, the resource configuration message is a dynamic resource configuration message, the resource configuration message includes a pattern list of the SBFD time-frequency resource, the pattern list includes a plurality of groups of resource configuration information, and each group of resource configuration information includes frequency-domain resource configuration information and/or time-domain resource configuration information;

the frequency-domain resource configuration information is used to determine a frequency-domain resource location of the SBFD time-frequency resource, and the time-domain resource configuration information is used to determine a time-domain resource location of the SBFD time-frequency resource;

the receiving module is further configured to receive a DCI indication message or a media access control-control element (MAC-CE) indication message sent by the base station, and assert a group of resource configuration information in the pattern list based on the DCI indication message or the MAC-CE indication message.

In an embodiment, the resource configuration message is a semi-persistent resource configuration message, and the resource configuration message includes at least one of frequency-domain resource configuration information or time-domain resource configuration information; and the frequency-domain resource configuration information is used to determine a frequency-domain resource location of the SBFD time-frequency resource, and the time-domain resource configuration information is used to determine a time-domain resource location of the SBFD time-frequency resource; the resource configuration message includes an SBFD association period parameter, and the apparatus further includes: a processing module, configured to determine a duration of the SBFD time-frequency resource based on the SBFD association period parameter.

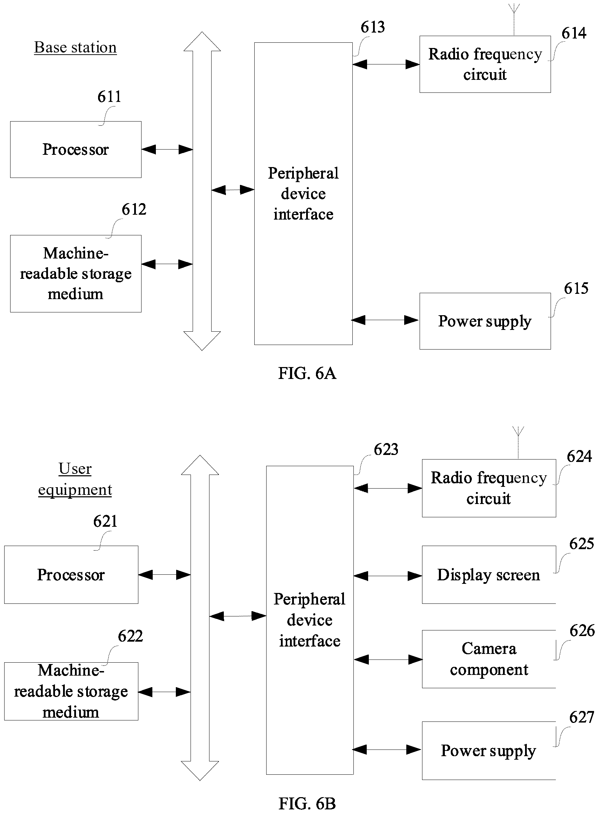

Based on a same application concept as the above method, an embodiment of the present disclosure provides a base station, and referring to FIG. 6A, the base station may include a processor 611 and a machine-readable storage medium 612, where the machine-readable storage medium 612 stores a machine-executable instruction executable by the processor 611; and the processor 611 is configured to execute the machine-executable instruction, to implement the data transmission method disclosed in the above embodiments of the present disclosure.

In an embodiment, the processor 611 may include one or more processing cores, for example, a 4-core processor or an 8-core processor. The processor 611 may be implemented in a hardware form of at least one of a digital signal processor (DSP), a field-programmable gate array (FPGA), or a programmable logic array (PLA). The processor 611 may also include a main processor and a co-processor, where the main processor is a processor configured to process data in an awake state, and is also referred to as a central processing unit (CPU); and the co-processor is a low-power processor configured to process data in a standby state. In some embodiments, the processor 611 may be integrated with a graphics processing unit (GPU), and the GPU is configured to render and draw content that needs to be displayed on a display screen.

In an embodiment, the base station may further optionally include a peripheral device interface 613 and at least one peripheral device. The processor 611 and the peripheral device interface 613 may be connected by using a bus or a signal line. Each peripheral device may be connected to the peripheral device interface 613 by using a bus, a signal line, or a circuit board. The peripheral device may include at least one of a radio frequency circuit 614 and a power supply 615. The radio frequency circuit 614 is configured to receive and transmit an RF (Radio Frequency) signal, also referred to as an electromagnetic signal. The radio frequency circuit 614 communicates with a communications network and other communication devices by using an electromagnetic signal. The radio frequency circuit 614 converts an electrical signal into an electromagnetic signal for transmission, or converts a received electromagnetic signal into an electrical signal. Optionally, the radio frequency circuit 614 includes an antenna system, an RF transceiver, one or more amplifiers, a tuner, an oscillator, a digital signal processor, a subscriber identity module card, and the like. The radio frequency circuit 614 may communicate with the user equipment through at least one wireless communication protocol. The wireless communication protocol includes, but is not limited to, the World Wide Web, a metropolitan area network, an intranet, various generations of mobile communication networks (2G, 3G, 4G, and 5G), a wireless local area network, and/or a WiFi (Wireless Fidelity) network.

The power supply 615 is configured to supply power to components in the base station, and the power supply 615 may be an alternating current, a direct current, a disposable battery, or a rechargeable battery.

Based on a same application concept as the above method, an embodiment of the present disclosure provides a user equipment, and referring to FIG. 6B, the user equipment may include a processor 621 and a machine-readable storage medium 622, where the machine-readable storage medium 622 stores a machine-executable instruction executable by the processor 621; and the processor 621 is configured to execute the machine-executable instruction, to implement the data transmission method disclosed in the above embodiments of the present disclosure.

In an embodiment, the processor 621 may include one or more processing cores, for example, a 4-core processor or an 8-core processor. The processor 621 may be implemented in a hardware form of at least one of a DSP, an FPGA, and PLA. The processor 621 may also include a main processor and a co-processor.

In an embodiment, the user equipment further includes a peripheral device interface 623 and at least one peripheral device. The processor 621 and the peripheral device interface 623 may be connected by using a bus or a signal line. Each peripheral device may be connected to the peripheral device interface 623 by using a bus, a signal line, or a circuit board. The peripheral device may include at least one of a radio frequency circuit 624, a touch display screen 625, a camera component 626, and a power supply 627.

The RF circuit 624 is configured to receive and transmit RF signals, also referred to as electromagnetic signals. The radio frequency circuit 624 communicates with a communications network and other communication devices by using an electromagnetic signal. The radio frequency circuit 624 converts an electrical signal into an electromagnetic signal for transmission, or converts a received electromagnetic signal into an electrical signal. Optionally, the radio frequency circuit 624 includes an antenna system, an RF transceiver, one or more amplifiers, a tuner, an oscillator, a digital signal processor, a subscriber identity module card, and the like. The radio frequency circuit 624 may communicate with the base station through at least one wireless communication protocol. The wireless communication protocol includes, but is not limited to, the World Wide Web, metropolitan area networks, intranets, various generations of mobile communication networks, wireless local area networks, and/or WiFi.

The display screen 625 is configured to display a user interface (UI). The UI may include graphics, text, icons, videos, and any combination thereof. When the display screen 625 is a touch display screen, the display screen 625 also has capability of collecting touch signals on or above a surface of the display screen 625. The touch signal may be input to the processor 621 as a control signal for processing. In this case, the display screen 625 may be further configured to provide a virtual button and/or a virtual keyboard, also referred to as a soft button and/or a soft keyboard. In some embodiments, there may be one display screen 625 provided as a front panel of the user equipment; in other embodiments, there may be at least two display screens 625 respectively provided on different surfaces of the user equipment or in a folded design; in still other embodiments, the display screen 625 may be a flexible display screen provided on a curved surface or a folded surface of the user equipment. Even, the display screen 625 may also be set as a non-rectangular irregular pattern, that is, a special-shaped screen. The display screen 625 may be made of a material such as an LCD (Liquid Crystal Display) or an OLED (Organic Light-Emitting Diode).

The camera component 626 is configured to capture an image or a video. Optionally, the camera component 626 includes a front camera and a rear camera. Generally, the front camera is disposed on a front panel of the user equipment, and the rear camera is disposed on a back surface of the user equipment. In some embodiments, there are at least two rear cameras, which are respectively any one of a main camera, a depth-of-field camera, a wide-angle camera, and a telephoto camera, to implement a background blurring function by fusing the main camera and the depth-of-field camera, and implement panoramic shooting and VR (Virtual Reality) shooting functions by fusing the main camera and the wide-angle camera, or other fused shooting functions. In some embodiments, the camera component 626 may further include a flash. The flashlamp may be a monochromatic temperature flashlamp or a dual-color temperature flashlamp. The dual-color temperature flashlamp refers to a combination of a warm-light flashlamp and a cold-light flashlamp, and can be used for light compensation at different color temperatures.

The power supply 627 is configured to supply power to components in the user equipment. The power supply 627 may be an alternating current, direct current, disposable battery, or rechargeable battery. When the power supply 627 includes a rechargeable battery, the rechargeable battery may be a wired charged battery or a wireless charged battery.

Based on a same application concept as the above method, an embodiment of the present disclosure further provides a machine-readable storage medium, where the machine-readable storage medium stores a plurality of computer instructions, and when the computer instructions are executed by a processor, the data transmission method disclosed in the above embodiments of the present disclosure can be implemented.

The machine-readable storage medium may be any electronic, magnetic, optical, or other physical storage device, and may include or store information, such as executable instructions, data, or the like. For example, the machine-readable storage medium may be a random access memory (RAM), a volatile memory, a non-volatile memory, a flash memory, a storage drive (such as a hard disk drive), a solid state drive, any type of storage disk (such as an optical disk, dvd, etc.), or a similar storage medium, or a combination thereof.

The system, apparatus, module or unit illustrated in the above embodiments may be specifically implemented by a computer entity, or implemented by a product having a certain function. A typical implementation device is a computer, and a specific form of the computer may be a personal computer, a laptop computer, a cellular phone, a camera phone, a smartphone, a personal digital assistant, a media player, a navigation device, an email transceiver device, a game console, a tablet computer, a wearable device, or a combination of any one of these devices. The above description is merely embodiments of the present disclosure, and is not intended to limit the present disclosure. For those skilled in the art, the present application may have various modifications and variations. Any modifications, equivalent substitutions, improvements, etc. made within the spirit and principle of the present application shall fall within the scope of the claims of the present application.

**Claims**

1. A data transmission method, performed by a base station, comprising:

   sending a resource configuration message to a user equipment, wherein the resource configuration message is used to indicate a sub-band full-duplex (SBFD) time-frequency resource assigned to the user equipment; and
   interacting uplink and downlink data with the user equipment based on the SBFD time-frequency resource.

2. The method according to claim 1, wherein the resource configuration message is a semi-static resource configuration message, and the resource configuration message comprises at least one of frequency-domain resource configuration information or time-domain resource configuration information; and the frequency-domain resource configuration information is used to determine a frequency-domain resource location of the SBFD time-frequency resource, and the time-domain resource configuration information is used to determine a time-domain resource location of the SBFD time-frequency resource;
   after sending the resource configuration message to the user equipment, the method further comprises:
   sending a downlink control information (DCI) activation message to the user equipment, wherein the DCI activation message is used to enable the user equipment to activate the SBFD time-frequency resource.

3. The method according to claim 1, wherein the resource configuration message is a semi-static resource configuration message, the resource configuration message comprises a pattern list of the SBFD time-frequency resource, the pattern list comprises groups of resource configuration information, and each group of resource configuration information comprises at least one of frequency-domain resource configuration information or time-domain resource configuration information;

   the frequency-domain resource configuration information is used to determine a frequency-domain resource location of the SBFD time-frequency resource, and the time-domain resource configuration information is used to determine a time-domain resource location of the SBFD time-frequency resource;
   after sending the resource configuration message to the user equipment, the method further comprises:

   sending a DCI indication message to the user equipment, wherein the DCI indication message is used to enable the user equipment to assert a first group of resource configuration information in the pattern list; and
   sending a DCI activation message to the user equipment, wherein the DCI activation message is used to enable the user equipment to activate the SBFD time-frequency resource corresponding to the first group of resource configuration information.

4. The method according to claim 2 or 3, wherein the frequency-domain resource location comprises a start physical resource block (PRB) and a number of PRBs of the SBFD time-frequency resource;

the time-domain resource location comprises a start symbol and a number of symbols in a slot of the SBFD time-frequency resource;
the time-domain resource location further comprises a start slot and a number of slots of the SBFD time-frequency resource; or the time-domain resource location further comprises an SBFD aggregation factor of the SBFD time-frequency resource;
wherein the SBFD aggregation factor is used to indicate a number of downlink resources occupied by the SBFD time-frequency resource, or the SBFD aggregation factor is used to indicate a number of flexible resources occupied by the SBFD time-frequency resource, or the SBFD aggregation factor is used to indicate a number of downlink resources and a number of flexible resources occupied by the SBFD time-frequency resource.

5. The method according to claim 2 or 3, wherein,
after sending the DCI activation message to the user equipment, the method further comprises:
sending a DCI deactivation message to the user equipment, wherein the DCI deactivation message is used to enable the user equipment to deactivate the SBFD time-frequency resource.

6. The method according to claim 5, wherein,

the DCI activation message or the DCI deactivation message is a first-type DCI message, the first-type DCI message comprises a specified field, the specified field is a first specified identifier or a second specified identifier, the first specified identifier is used to enable the user equipment to activate the SBFD time-frequency resource, and the second specified identifier is used to enable the user equipment to deactivate the SBFD time-frequency resource; or
the DCI activation message or the DCI deactivation message is a first-type DCI message, the first-type DCI message comprises a reserved bit, the reserved bit takes a first value or a second value, the first value is used to enable the user equipment to activate the SBFD time-frequency resource, and the second value is used to enable the user equipment to deactivate the SBFD time-frequency resource; or
the DCI activation message or the DCI deactivation message is a second-type DCI message, the second-type DCI message comprises a resource field used to indicate to activate or deactivate the SBFD time-frequency resource, the resource field takes a third value or a fourth value, the third value is used to enable the user equipment to activate the SBFD time-frequency resource, and the fourth value is used to enable the user equipment to deactivate the SBFD time-frequency resource.

7. The method according to claim 6, wherein before sending the DCI activation message or the DCI deactivation message to the user equipment, the method further comprises:

scrambling the DCI activation message or the DCI deactivation message by using a cell-radio network temporary identifier (C-RNTI), wherein the C-RNTI is an RNTI for the user equipment, and C-RNTIs of different user equipments are different; or
scrambling the DCI activation message or the DCI deactivation message by using a group-radio network temporary identifier (G-RNTI), wherein the G-RNTI is an RNTI for a cluster group to which the user equipment belongs, and G-RNTIs of different cluster groups are different; or
scrambling the DCI activation message or the DCI deactivation message by using an SBFD-RNTI, wherein the SBFD-RNTI is an RNTI for the SBFD time-frequency resource.

8. The method according to claim 7, wherein before scrambling the DCI activation message or the DCI deactivation message by using the SBFD-RNTI, the method further comprises:

sending a scrambling message to the user equipment, wherein the scrambling message comprises the SBFD-RNTI, or
pre-storing the SBFD-RNTI in the user equipment.

9. The method according to claim 3, wherein the DCI indication message comprises an assertion interval duration, the assertion interval duration represents an interval duration between a receiving moment of the DCI indication message and an assertion time, and the assertion time represents an assertion time of the first group of resource configuration information in the pattern list.

**10.** The method according to claim 2, wherein,

after sending the resource configuration message to the user equipment, the method further comprises:
sending a dynamic resource configuration message to the user equipment, wherein the dynamic resource configuration message is used to indicate a changed SBFD time-frequency resource assigned to the user equipment.

**11.** The method according to claim 3, wherein after sending the DCI indication message to the user equipment, the method further comprises:

when the SBFD time-frequency resource corresponding to the user equipment changes and a changed SBFD time-frequency resource corresponds to a second group of resource configuration information in the pattern list, sending a dynamic resource configuration message to the user equipment, wherein the dynamic resource configuration message is used to enable the user equipment to assert the second group of resource configuration information in the pattern list.

**12.** The method according to claim 1, wherein the resource configuration message is a dynamic resource configuration message, and the resource configuration message comprises at least one of frequency-domain resource configuration information or time-domain resource configuration information; and the frequency-domain resource configuration information is used to determine a frequency-domain resource location of the SBFD time-frequency resource, and the time-domain resource configuration information is used to determine a time-domain resource location of the SBFD time-frequency resource.

**13.** The method according to claim 1, wherein the resource configuration message is a dynamic resource configuration message, the resource configuration message comprises a pattern list of the SBFD time-frequency resource, the pattern list comprises groups of resource configuration information, and each group of resource configuration information comprises at least one of frequency-domain resource configuration information or time-domain resource configuration information;

the frequency-domain resource configuration information is used to determine a frequency-domain resource location of the SBFD time-frequency resource, and the time-domain resource configuration information is used to determine a time-domain resource location of the SBFD time-frequency resource;
after sending the resource configuration message to the user equipment, the method further comprises:
sending a DCI indication message or a media access control-control element (MAC-CE) indication message to the user equipment, wherein the DCI indication message or the MAC-CE indication message is used to enable the user equipment to assert a group of resource configuration information in the pattern list.

**14.** The method according to claim 1, wherein the resource configuration message is a semi-persistent resource configuration message, and the resource configuration message comprises at least one of frequency-domain resource configuration information or time-domain resource configuration information; and the frequency-domain resource configuration information is used to determine a frequency-domain resource location of the SBFD time-frequency resource, and the time-domain resource configuration information is used to determine a time-domain resource location of the SBFD time-frequency resource;
the resource configuration message comprises an SBFD association period parameter, and the resource configuration message is used to enable the user equipment to determine a duration of the SBFD time-frequency resource based on the SBFD association period parameter.

**15.** The method according to claim 1, wherein before sending the resource configuration message to the user equipment, the method further comprises:

acquiring a slot format indicator (SFI) configuration assigned to the user equipment;
allocating the SBFD time-frequency resource to the user equipment based on a slot format indicated by the SFI configuration, wherein the SBFD time-frequency resource occupies at least one of a downlink slot or a flexible slot in the slot format; or
assigning the SBFD time-frequency resource not associated with the SFI configuration to the user equipment, wherein the SBFD time-frequency resource occupies at least one of a downlink slot or a flexible slot.

**16.** A data transmission method, performed by a user equipment, comprising:

receiving a resource configuration message sent by a base station, wherein the resource configuration message is used to indicate a sub-band full-duplex (SBFD) time-frequency resource assigned to the user equipment; and

interacting uplink and downlink data with the base station based on the SBFD time-frequency resource.

17. The method according to claim 16, wherein the resource configuration message is a semi-static resource configuration message, and the resource configuration message comprises at least one of frequency-domain resource configuration information or time-domain resource configuration information; and the frequency-domain resource configuration information is used to determine a frequency-domain resource location of the SBFD time-frequency resource, and the time-domain resource configuration information is used to determine a time-domain resource location of the SBFD time-frequency resource;

after receiving the resource configuration message sent by the base station, the method further comprises: receiving a DCI activation message sent by the base station, and activating the SBFD time-frequency resource based on the DCI activation message.

18. The method according to claim 16, wherein the resource configuration message is a semi-static resource configuration message, the resource configuration message comprises a pattern list of the SBFD time-frequency resource, the pattern list comprises groups of resource configuration information, and each group of resource configuration information comprises at least one of frequency-domain resource configuration information or time-domain resource configuration information;

the frequency-domain resource configuration information is used to determine a frequency-domain resource location of the SBFD time-frequency resource, and the time-domain resource configuration information is used to determine a time-domain resource location of the SBFD time-frequency resource;
after receiving the resource configuration message sent by the base station, the method further comprises:

receiving a DCI indication message sent by the base station, and asserting a first group of resource configuration information in the pattern list based on the DCI indication message;
receiving a DCI activation message sent by the base station, and activating the SBFD time-frequency resource corresponding to the first group of resource configuration information based on the DCI activation message.

19. The method according to claim 17 or 18, wherein the frequency-domain resource location comprises a start physical resource block (PRB) and a number of PRBs of the SBFD time-frequency resource;

the time-domain resource location comprises a start symbol and a number of symbols in a slot of the SBFD time-frequency resource;
the time-domain resource location further comprises a start slot and a number of slots of the SBFD time-frequency resource; or the time-domain resource location further comprises an SBFD aggregation factor of the SBFD time-frequency resource;
wherein the SBFD aggregation factor is used to indicate a number of downlink resources occupied by the SBFD time-frequency resource, or the SBFD aggregation factor is used to indicate a number of flexible resources occupied by the SBFD time-frequency resource, or the SBFD aggregation factor is used to indicate a number of downlink resources and a number of flexible resources occupied by the SBFD time-frequency resource.

20. The method according to claim 17 or 18, wherein,
after receiving the DCI activation message sent by the base station, the method further comprises:

receiving a DCI deactivation message sent by the base station; and
deactivating the SBFD time-frequency resource based on the DCI deactivation message.

21. The method according to claim 20, wherein,

the DCI activation message or the DCI deactivation message is a first-type DCI message, the first-type DCI message comprises a specified field, the specified field is a first specified identifier or a second specified identifier, the first specified identifier is used to enable the user equipment to activate the SBFD time-frequency resource, and the second specified identifier is used to enable the user equipment to deactivate the SBFD time-frequency resource; or
the DCI activation message or the DCI deactivation message is a first-type DCI message, the first-type DCI message comprises a reserved bit, the reserved bit takes a first value or a second value, the first value is used to enable the user equipment to activate the SBFD time-frequency resource, and the second value is used to enable the user equipment to deactivate the SBFD time-frequency resource; or

the DCI activation message or the DCI deactivation message is a second-type DCI message, the second-type DCI message comprises a resource field used to indicate to activate or deactivate the SBFD time-frequency resource, the resource field takes a third value or a fourth value, the third value is used to enable the user equipment to activate the SBFD time-frequency resource, and the fourth value is used to enable the user equipment to deactivate the SBFD time-frequency resource.

22. The method according to claim 21, wherein after receiving the DCI activation message or the DCI deactivation message sent by the base station, the method further comprises:

descrambling the DCI activation message or the DCI deactivation message by using a cell-radio network temporary identifier (C-RNTI), wherein the C-RNTI is an RNTI for the user equipment, and C-RNTIs of different user equipments are different; or
descrambling the DCI activation message or the DCI deactivation message by using a group-radio network temporary identifier (G-RNTI), wherein the G-RNTI is an RNTI for a cluster group to which the user equipment belongs, and G-RNTIs of different cluster groups are different; or
descrambling the DCI activation message or the DCI deactivation message by using an SBFD-RNTI, wherein the SBFD-RNTI is an RNTI for the SBFD time-frequency resource.

23. The method according to claim 22, wherein before descrambling the DCI activation message or the DCI deactivation message by using the SBFD-RNTI, the method further comprises:

receiving a scrambling message sent by the base station, wherein the scrambling message comprises the SBFD-RNTI, or
pre-storing the SBFD-RNTI in the user equipment.

24. The method according to claim 18, wherein asserting the first group of resource configuration information in the pattern list based on the DCI indication message comprises:

determining an assertion time based on a next frame of a current frame carrying the DCI indication message, and asserting the first group of resource configuration information in the pattern list at the assertion time; or
determining an assertion time based on a system frame number and a SBFD time-frequency resource period parameter, and asserting the first group of resource configuration information in the pattern list at the assertion time; or
determining an assertion time based on a system frame number, and asserting the first group of resource configuration information in the pattern list at the assertion time; or
acquiring an assertion interval duration, wherein the assertion interval duration indicates an interval duration between a receiving moment of the DCI indication message and an assertion time, and determining the assertion time based on the assertion interval duration, and asserting the first group of resource configuration information in the pattern list at the assertion time.

25. The method according to claim 17, wherein,
after receiving the resource configuration message sent by the base station, the method further comprises:

receiving a dynamic resource configuration message sent by the base station; and
determining a changed SBFD time-frequency resource based on the dynamic resource configuration message.

26. The method according to claim 18, wherein,
after receiving the DCI indication message sent by the base station, and asserting the first group of resource configuration information in the pattern list based on the DCI indication message, the method further comprises:

receiving a dynamic resource configuration message sent by the base station; and
asserting a second group of resource configuration information in the pattern list based on the dynamic resource configuration message.

27. The method according to claim 16, wherein the resource configuration message is a dynamic resource configuration message, and the resource configuration message comprises at least one of frequency-domain resource configuration information or time-domain resource configuration information; and the frequency-domain resource configuration information is used to determine a frequency-domain resource location of the SBFD time-frequency resource, and the time-domain resource configuration information is used to determine a time-domain resource location of the SBFD time-frequency resource.

28. The method according to claim 27, wherein after determining the SBFD time-frequency resource based on the resource configuration message, the method further comprises:

determining an assertion time based on a next frame of a current frame carrying the dynamic resource configuration message, and asserting the SBFD time-frequency resource at the assertion time; or
determining an assertion time based on a system frame number and a SBFD time-frequency resource period parameter, and asserting the SBFD time-frequency resource at the assertion time; or
determining an assertion time based on a system frame number, and asserting the SBFD time-frequency resource at the assertion time; or
acquiring an assertion interval duration, wherein the assertion interval duration indicates an interval duration between a receiving moment of the dynamic resource configuration message and an assertion time, and determining the assertion time based on the assertion interval duration, and asserting the SBFD time-frequency resource at the assertion time.

29. The method according to claim 16, wherein the resource configuration message is a dynamic resource configuration message, the resource configuration message comprises a pattern list of the SBFD time-frequency resource, the pattern list comprises groups of resource configuration information, and each group of resource configuration information comprises at least one of frequency-domain resource configuration information or time-domain resource configuration information;

the frequency-domain resource configuration information is used to determine a frequency-domain resource location of the SBFD time-frequency resource, and the time-domain resource configuration information is used to determine a time-domain resource location of the SBFD time-frequency resource;
after receiving the resource configuration message sent by the base station, the method further comprises:
receiving a DCI indication message or a media access control-control element (MAC-CE) indication message sent by the base station, and asserting a group of resource configuration information in the pattern list based on the DCI indication message or the MAC-CE indication message.

30. The method according to claim 16, wherein the resource configuration message is a semi-persistent resource configuration message, and the resource configuration message comprises at least one of frequency-domain resource configuration information or time-domain resource configuration information; and the frequency-domain resource configuration information is used to determine a frequency-domain resource location of the SBFD time-frequency resource, and the time-domain resource configuration information is used to determine a time-domain resource location of the SBFD time-frequency resource;

the resource configuration message comprises an SBFD association period parameter, and the method further comprises: determining a duration of the SBFD time-frequency resource based on the SBFD association period parameter.

31. A data transmission apparatus, applied in a base station, comprising:

a sending module, configured to send a resource configuration message to a user equipment, wherein the resource configuration message is used to indicate a sub-band full-duplex (SBFD) time-frequency resource assigned to the user equipment; and
a transmitting module, configured to interact uplink and downlink data with the user equipment based on the SBFD time-frequency resource.

32. The apparatus according to claim 31, wherein the resource configuration message is a semi-static resource configuration message, and the resource configuration message comprises at least one of frequency-domain resource configuration information or time-domain resource configuration information; and the frequency-domain resource configuration information is used to determine a frequency-domain resource location of the SBFD time-frequency resource, and the time-domain resource configuration information is used to determine a time-domain resource location of the SBFD time-frequency resource;

the sending module is further configured to send a downlink control information (DCI) activation message to the user equipment, wherein the DCI activation message is used to enable the user equipment to activate the SBFD time-frequency resource.

33. The apparatus according to claim 31, wherein the resource configuration message is a semi-static resource configuration message, the resource configuration message comprises a pattern list of the SBFD time-frequency resource, the pattern list comprises groups of resource configuration information, and each group of resource configuration information comprises at least one of frequency-domain resource configuration information or time-domain resource configuration information;

the frequency-domain resource configuration information is used to determine a frequency-domain resource location of the SBFD time-frequency resource, and the time-domain resource configuration information is used to determine a time-domain resource location of the SBFD time-frequency resource;
the sending module is further configured to send a DCI indication message to the user equipment, wherein the DCI indication message is used to enable the user equipment to assert a first group of resource configuration information in the pattern list; and
the sending module is further configured to send a DCI activation message to the user equipment, wherein the DCI activation message is used to enable the user equipment to activate the SBFD time-frequency resource corresponding to the first group of resource configuration information.

34. The apparatus according to claim 32 or 33, wherein the frequency-domain resource location comprises a start physical resource block (PRB) and a number of PRBs of the SBFD time-frequency resource;

the time-domain resource location comprises a start symbol and a number of symbols in a slot of the SBFD time-frequency resource;
the time-domain resource location further comprises a start slot and a number of slots of the SBFD time-frequency resource; or the time-domain resource location further comprises an SBFD aggregation factor of the SBFD time-frequency resource;
wherein the SBFD aggregation factor is used to indicate a number of downlink resources occupied by the SBFD time-frequency resource, or the SBFD aggregation factor is used to indicate a number of flexible resources occupied by the SBFD time-frequency resource, or the SBFD aggregation factor is used to indicate a number of downlink resources and a number of flexible resources occupied by the SBFD time-frequency resource.

35. The apparatus according to claim 32 or 33, wherein,
the sending module is further configured to send a DCI deactivation message to the user equipment, wherein the DCI deactivation message is used to enable the user equipment to deactivate the SBFD time-frequency resource.

36. The apparatus according to claim 35, wherein,

the DCI activation message or the DCI deactivation message is a first-type DCI message, the first-type DCI message comprises a specified field, the specified field is a first specified identifier or a second specified identifier, the first specified identifier is used to enable the user equipment to activate the SBFD time-frequency resource, and the second specified identifier is used to enable the user equipment to deactivate the SBFD time-frequency resource; or
the DCI activation message or the DCI deactivation message is a first-type DCI message, the first-type DCI message comprises a reserved bit, the reserved bit takes a first value or a second value, the first value is used to enable the user equipment to activate the SBFD time-frequency resource, and the second value is used to enable the user equipment to deactivate the SBFD time-frequency resource; or
the DCI activation message or the DCI deactivation message is a second-type DCI message, the second-type DCI message comprises a resource field used to indicate to activate or deactivate the SBFD time-frequency resource, the resource field takes a third value or a fourth value, the third value is used to enable the user equipment to activate the SBFD time-frequency resource, and the fourth value is used to enable the user equipment to deactivate the SBFD time-frequency resource.

37. The apparatus according to claim 36, further comprising:

a scrambling module, configured to scramble the DCI activation message or the DCI deactivation message by using a cell-radio network temporary identifier (C-RNTI), wherein the C-RNTI is an RNTI for the user equipment, and C-RNTIs of different user equipments are different; or
scramble the DCI activation message or the DCI deactivation message by using a group-radio network temporary identifier (G-RNTI), wherein the G-RNTI is an RNTI for a cluster group to which the user equipment belongs, and G-RNTIs of different cluster groups are different; or

scramble the DCI activation message or the DCI deactivation message by using an SBFD-RNTI, wherein the SBFD-RNTI is an RNTI for the SBFD time-frequency resource.

38. The apparatus according to claim 37, wherein the sending module is further configured to send a scrambling message to the user equipment, wherein the scrambling message comprises the SBFD-RNTI.

39. The apparatus according to claim 33, wherein the DCI indication message comprises an assertion interval duration, the assertion interval duration represents an interval duration between a receiving moment of the DCI indication message and an assertion time, and the assertion time represents an assertion time of the first group of resource configuration information in the pattern list.

40. The apparatus according to claim 32, wherein,

the sending module is further configured to send a dynamic resource configuration message to the user equipment, wherein the dynamic resource configuration message is used to indicate a changed SBFD time-frequency resource assigned to the user equipment.

41. The apparatus according to claim 33, wherein,

the sending module is further configured to, when the SBFD time-frequency resource corresponding to the user equipment changes and a changed SBFD time-frequency resource corresponds to a second group of resource configuration information in the pattern list, send a dynamic resource configuration message to the user equipment , wherein the dynamic resource configuration message is used to enable the user equipment to assert the second group of resource configuration information in the pattern list.

42. The apparatus according to claim 31, wherein the resource configuration message is a dynamic resource configuration message, and the resource configuration message comprises at least one of frequency-domain resource configuration information or time-domain resource configuration information; and the frequency-domain resource configuration information is used to determine a frequency-domain resource location of the SBFD time-frequency resource, and the time-domain resource configuration information is used to determine a time-domain resource location of the SBFD time-frequency resource.

43. The apparatus according to claim 31, wherein the resource configuration message is a dynamic resource configuration message, the resource configuration message comprises a pattern list of the SBFD time-frequency resource, the pattern list comprises groups of resource configuration information, and each group of resource configuration information comprises at least one of frequency-domain resource configuration information or time-domain resource configuration information;

the frequency-domain resource configuration information is used to determine a frequency-domain resource location of the SBFD time-frequency resource, and the time-domain resource configuration information is used to determine a time-domain resource location of the SBFD time-frequency resource;

the sending module is further configured to send a DCI indication message or a media access control-control element (MAC-CE) indication message to the user equipment, wherein the DCI indication message or the MAC-CE indication message is used to enable the user equipment to assert a group of resource configuration information in the pattern list.

44. The apparatus according to claim 31, wherein the resource configuration message is a semi-persistent resource configuration message, and the resource configuration message comprises at least one of frequency-domain resource configuration information or time-domain resource configuration information; and the frequency-domain resource configuration information is used to determine a frequency-domain resource location of the SBFD time-frequency resource, and the time-domain resource configuration information is used to determine a time-domain resource location of the SBFD time-frequency resource;

the resource configuration message comprises an SBFD association period parameter, and the resource configuration message is used to enable the user equipment to determine a duration of the SBFD time-frequency resource based on the SBFD association period parameter.

45. The apparatus according to claim 31, further comprising:

a processing module, configured to acquire a slot format indicator SFI configuration assigned to the user equipment; assign the SBFD time-frequency resource to the user equipment based on a slot format indicated by the SFI configuration; wherein the SBFD time-frequency resource occupies at least one of a downlink slot or a flexible slot in the slot format; or

assign the SBFD time-frequency resource not associated with the SFI configuration to the user equipment, wherein the SBFD time-frequency resource occupies at least one of a downlink slot or a flexible slot.

46. A data transmission apparatus, applied in a user equipment, comprising:

a receiving module, configured to receive a resource configuration message sent by a base station, wherein the resource configuration message is used to indicate a sub-band full-duplex (SBFD) time-frequency resource assigned to the user equipment; and
a transmitting module, configured to interact uplink and downlink data with the user equipment based on the SBFD time-frequency resource.

47. The apparatus according to claim 46, wherein the resource configuration message is a semi-static resource configuration message, and the resource configuration message comprises at least one of frequency-domain resource configuration information or time-domain resource configuration information; and the frequency-domain resource configuration information is used to determine a frequency-domain resource location of the SBFD time-frequency resource, and the time-domain resource configuration information is used to determine a time-domain resource location of the SBFD time-frequency resource;
the receiving module is further configured to receive a DCI activation message sent by the base station, and activate the SBFD time-frequency resource based on the DCI activation message.

48. The apparatus according to claim 46, wherein the resource configuration message is a semi-static resource configuration message, the resource configuration message comprises a pattern list of the SBFD time-frequency resource, the pattern list comprises groups of resource configuration information, and each group of resource configuration information comprises at least one of frequency-domain resource configuration information or time-domain resource configuration information;

the frequency-domain resource configuration information is used to determine a frequency-domain resource location of the SBFD time-frequency resource, and the time-domain resource configuration information is used to determine a time-domain resource location of the SBFD time-frequency resource;
the receiving module is further configured to receive a DCI indication message sent by the base station, and assert a first group of resource configuration information in the pattern list based on the DCI indication message;
the receiving module is further configured to receive a DCI activation message sent by the base station, and activate the SBFD time-frequency resource corresponding to the first group of resource configuration information based on the DCI activation message.

49. The apparatus according to claim 47 or 48, wherein the frequency-domain resource location comprises a start physical resource block (PRB) and a number of PRBs of the SBFD time-frequency resource;

the time-domain resource location comprises a start symbol and a number of symbols in a slot of the SBFD time-frequency resource;
the time-domain resource location further comprises a start slot and a number of slots of the SBFD time-frequency resource; or the time-domain resource location further comprises an SBFD aggregation factor of the SBFD time-frequency resource;
wherein the SBFD aggregation factor is used to indicate a number of downlink resources occupied by the SBFD time-frequency resource, or the SBFD aggregation factor is used to indicate a number of flexible resources occupied by the SBFD time-frequency resource, or the SBFD aggregation factor is used to indicate a number of downlink resources and a number of flexible resources occupied by the SBFD time-frequency resource.

50. The apparatus according to claim 47 or 48, wherein,
the receiving module is further configured to receive a DCI deactivation message sent by the base station, and deactivate the SBFD time-frequency resource based on the DCI deactivation message.

51. The apparatus according to claim 50, wherein,

the DCI activation message or the DCI deactivation message is a first-type DCI message, the first-type DCI message comprises a specified field, the specified field is a first specified identifier or a second specified identifier, the first specified identifier is used to enable the user equipment to activate the SBFD time-frequency resource, and the second specified identifier is used to enable the user equipment to deactivate the SBFD time-frequency resource; or

the DCI activation message or the DCI deactivation message is a first-type DCI message, the first-type DCI message comprises a reserved bit, the reserved bit takes a first value or a second value, the first value is used to enable the user equipment to activate the SBFD time-frequency resource, and the second value is used to enable the user equipment to deactivate the SBFD time-frequency resource; or

the DCI activation message or the DCI deactivation message is a second-type DCI message, the second-type DCI message comprises a resource field used to indicate to activate or deactivate the SBFD time-frequency resource, the resource field takes a third value or a fourth value, the third value is used to enable the user equipment to activate the SBFD time-frequency resource, and the fourth value is used to enable the user equipment to deactivate the SBFD time-frequency resource.

52. The apparatus according to claim 51, further comprising:

a descrambling module, configured to descramble the DCI activation message or the DCI deactivation message by using a cell-radio network temporary identifier (C-RNTI), wherein the C-RNTI is an RNTI for the user equipment, and C-RNTIs of different user equipments are different; or

descrambling the DCI activation message or the DCI deactivation message by using a group-radio network temporary identifier (G-RNTI), wherein the G-RNTI is an RNTI for a cluster group to which the user equipment belongs, and G-RNTIs of different cluster groups are different; or

descrambling the DCI activation message or the DCI deactivation message by using an SBFD-RNTI, wherein the SBFD-RNTI is an RNTI for the SBFD time-frequency resource.

53. The apparatus according to claim 52, wherein the receiving module is further configured to receive a scrambling message sent by the base station, wherein the scrambling message comprises the SBFD-RNTI.

54. The apparatus according to claim 48, wherein when asserting a first group of resource configuration information in the pattern list based on the DCI indication message, the receiving module is configured to:

determine an assertion time based on a next frame of a current frame carrying the DCI indication message, and assert the first group of resource configuration information in the pattern list at the assertion time; or

determine an assertion time based on a system frame number and a SBFD time-frequency resource period parameter, and assert the first group of resource configuration information in the pattern list at the assertion time; or

determine an assertion time based on a system frame number, and assert the first group of resource configuration information in the pattern list at the assertion time; or

acquire an assertion interval duration, wherein the assertion interval duration indicates an interval duration between a receiving moment of the DCI indication message and an assertion time, and determine the assertion time based on the assertion interval duration, and assert the first group of resource configuration information in the pattern list at the assertion time.

55. The apparatus according to claim 47, wherein,
the receiving module is further configured to receive a dynamic resource configuration message sent by the base station; and determine a changed SBFD time-frequency resource based on the dynamic resource configuration message.

56. The apparatus according to claim 48, wherein,
the receiving module is further configured to receive a dynamic resource configuration message sent by the base station; and assert a second group of resource configuration information in the pattern list based on the dynamic resource configuration message.

57. The apparatus according to claim 46, wherein the resource configuration message is a dynamic resource configuration message, and the resource configuration message comprises at least one of frequency-domain resource configuration information or time-domain resource configuration information; and the frequency-domain resource configuration information is used to determine a frequency-domain resource location of the SBFD time-frequency resource, and the time-domain resource configuration information is used to determine a time-domain resource location of the SBFD time-frequency resource.

58. The apparatus according to claim 57, further comprising:

a processing module, configured to determine an assertion time based on a next frame of a current frame carrying the dynamic resource configuration message, and assert the SBFD time-frequency resource at the assertion time; or
determine an assertion time based on a system frame number and a SBFD time-frequency resource period parameter, and asserting the SBFD time-frequency resource at the assertion time; or
determine an assertion time based on a system frame number, and asserting the SBFD time-frequency resource at the assertion time; or
acquire an assertion interval duration, wherein the assertion interval duration indicates an interval duration between a receiving moment of the dynamic resource configuration message and an assertion time, and determine the assertion time based on the assertion interval duration, and assert the SBFD time-frequency resource at the assertion time.

59. The apparatus according to claim 46, wherein the resource configuration message is a dynamic resource configuration message, the resource configuration message comprises a pattern list of the SBFD time-frequency resource, the pattern list comprises groups of resource configuration information, and each group of resource configuration information comprises at least one of frequency-domain resource configuration information or time-domain resource configuration information;

the frequency-domain resource configuration information is used to determine a frequency-domain resource location of the SBFD time-frequency resource, and the time-domain resource configuration information is used to determine a time-domain resource location of the SBFD time-frequency resource;
the receiving module is further configured to receive a DCI indication message or a media access control-control element (MAC-CE) indication message sent by the base station, and assert a group of resource configuration information in the pattern list based on the DCI indication message or the MAC-CE indication message.

60. The apparatus according to claim 46, wherein the resource configuration message is a semi-persistent resource configuration message, and the resource configuration message comprises at least one of frequency-domain resource configuration information or time-domain resource configuration information; and the frequency-domain resource configuration information is used to determine a frequency-domain resource location of the SBFD time-frequency resource, and the time-domain resource configuration information is used to determine a time-domain resource location of the SBFD time-frequency resource;
the resource configuration message comprises an SBFD association period parameter, and the apparatus further comprises: a processing module, configured to determine a duration of the SBFD time-frequency resource based on the SBFD association period parameter.

61. A base station, comprising: a processor and a machine-readable storage medium, wherein the machine-readable storage medium stores a machine-executable instruction executable by the processor; and the processor is configured to execute the machine-executable instruction to implement the method according to any one of claims 1-15.

62. A user equipment, comprising: a processor and a machine-readable storage medium, wherein the machine-readable storage medium stores a machine-executable instruction executable by the processor; and the processor is configured to execute the machine-executable instruction to implement the method according to any one of claims 16-30.

Send a resource configuration message to a user equipment (UE), where the resource configuration message is used to indicate an SBFD time-frequency resource assigned to the UE — 111

Interact uplink and downlink data with the UE based on the SBFD time-frequency resource — 112

FIG. 1A

Receive a resource configuration message sent by a base station, where the resource configuration message is used to indicate an SBFD time-frequency resource assigned to the UE, that is, the UE determines the SBFD time-frequency resource based on the resource configuration — 121

Interact uplink and downlink data with the base station based on the SBFD time-frequency resource — 122

FIG. 1B

$K_s$ (Slot)

DCI

SB FD | SB FD | D | F | U | SB FD | SB FD | D | F | U | SB FD | SB FD | D | F | U | SB FD | SB FD | D | F | U

S B F D | S B F D | S B F D | S B F D

L (Symbol)

S symbol

FIG. 2

FIG. 3

Base station | UE

Send resource configuration message through high-layer signaling

Assert SBFD time-frequency resource through a scrambled DCI activation message

Perform uplink and downlink data transmission based on the SBFD time-frequency resource configuration

Re-configure SBFD time-frequency resource through a scrambled DCI message

Perform uplink and downlink data transmission based on a new SBFD time-frequency resource configuration

Release the SBFD time-frequency resource through a scrambled DCI deactivation message

FIG. 4

FIG. 5

Base station

611

Processor

612

Machine-
readable storage
medium

Peripheral
device
interface

613

Radio frequency
circuit

614

615

Power supply

FIG. 6A

User
equipment

621

Processor

622

Machine-
readable storage
medium

Peripheral
device
interface

623

Radio frequency
circuit

624

625

Display screen

626

Camera
component

627

Power supply

FIG. 6B

## INTERNATIONAL SEARCH REPORT

| | International application No. |
|---|---|
| | **PCT/CN2024/075058** |

### A. CLASSIFICATION OF SUBJECT MATTER

H04W 72/23(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; ENTXTC; ENTXT; VEN; 3GPP; IEEE: 子带全双工, SBFD, 资源, 配置, 指示, 时频, 上行, 下行, 上下行, DCI, 激活, 图案, 图样, 聚合因子, 周期, resource, allocat+, configurat+, indicat+, time 1w frequency, UL, DL, activat +, pattern, aggregation factor, period

### C. DOCUMENTS CONSIDERED TO BE RELEVANT

| Category* | Citation of document, with indication, where appropriate, of the relevant passages | Relevant to claim No. |
|---|---|---|
| E | US 2024049200 A1 (QUALCOMM INC.) 08 February 2024 (2024-02-08) description, paragraphs 87-90, 155, and 169 | 1, 16, 31, 46, 61, 62 |
| X | CN 117320172 A (VIVO COMMUNICATION TECHNOLOGY CO., LTD.) 29 December 2023 (2023-12-29) claims 17-28, and description, paragraphs 60-96 and 127 | 1, 2, 5-8, 10, 12, 14-17, 20-23, 25, 27, 28, 30-32, 35-38, 40, 42, 44-47, 50-53, 55, 57, 58, 60-62 |
| X | US 2023075417 A1 (QUALCOMM INC.) 09 March 2023 (2023-03-09) description, paragraphs 67-98 | 1, 2, 5-8, 10, 12, 15-17,20-23,25,27,28,31, 32,35-38,40,42,45-47, 50-53,55,57,58,61,62 |
| X | SAMSUNG. "R1-2203904, "Subband non-overlapping full duplex for duplex evalution"" *3GPP tsg_ran\wg1_rl1*, 30 April 2022 (2022-04-30), section 4.1 | 1, 16, 31, 46, 61, 62 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 August 2024** | **03 September 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/075058** |

**C.    DOCUMENTS CONSIDERED TO BE RELEVANT**

| Category* | Citation of document, with indication, where appropriate, of the relevant passages | Relevant to claim No. |
|---|---|---|
| X | US 2024031116 A1 (QUALCOMM INC.) 25 January 2024 (2024-01-25) description, paragraphs 77-83 | 1, 16, 31, 46, 61, 62 |
| A | US 2024031116 A1 (QUALCOMM INC.) 25 January 2024 (2024-01-25) description, paragraphs 77-83 | 2-15, 17-30, 32-45, 47-60 |

Form PCT/ISA/210 (second sheet) (July 2022)

**INTERNATIONAL SEARCH REPORT**
Information on patent family members

International application No.

**PCT/CN2024/075058**

| Patent document cited in search report | | | Publication date (day/month/year) | Patent family member(s) | | | Publication date (day/month/year) |
|---|---|---|---|---|---|---|---|
| US | 2024049200 | A1 | 08 February 2024 | None | | | |
| CN | 117320172 | A | 29 December 2023 | None | | | |
| US | 2023075417 | A1 | 09 March 2023 | WO | 2023039324 | A1 | 16 March 2023 |
| | | | | US | 11832270 | B2 | 28 November 2023 |
| | | | | EP | 4399826 | A1 | 17 July 2024 |
| | | | | IN | 202427004909 | A | 23 February 2024 |
| | | | | CN | 117897926 | A | 16 April 2024 |
| US | 2024031116 | A1 | 25 January 2024 | WO | 2024020280 | A1 | 25 January 2024 |

Form PCT/ISA/210 (patent family annex) (July 2022)